# EUROPEAN PATENT APPLICATION

(11) **EP 1 950 746 A1**
(43) Date of publication of application: **30.07.2008**
(21) Application number: 06812153.2
(22) Date of filing: 24.10.2006
(51) Int. Cl.: G11B 7/0045, G11B 23/40

(54) **METHOD AND DEVICE FOR PRINTING ON OPTICAL RECORDING MEDIUM AND OPTICAL RECORDING MEDIUM**

(30) Priority: 25.10.2005 JP 2005310301; 25.10.2005 JP 2005310300
(71) Applicant: Mitsubishi Kagaku Media Co., Ltd., Tokyo 108-0014 (JP)
(72) Inventor: TAKESHIMA, Hideharu, Tokyo 108-0014 (JP)
(74) Representative: HOFFMANN EITLE
(86) International application number: PCT/JP2006/321093
(87) International publication number: WO 2007/049574

(57) **Abstract**

Provided is a printing method that suppresses displacement of additional printing carried out in association with additional recording of data when label printing is carried out on an optical recording medium having address information and that enables high-quality label printing.

The printing method is applied to an optical recording medium M having a recording/playback functional layer enabling recording or playback by a laser beam, an information recording/playback surface 3 irradiated with the laser beam, and a printing layer separated from the information recording/playback surface by the recording/playback functional layer, wherein address information used for recording or playback is recorded on the recording/playback functional layer, the printing method comprising the steps of detecting the address information by irradiating the information recording/playback surface 3 with the laser beam; and carrying out printing on the printing layer using the detected address information.

## Description

### TECHNICAL FIELD

The present invention relates to a method for printing on a printing layer of an optical recording medium, a printing device, and an optical recording medium having a printing layer on which printing is carried out.

### BACKGROUND ART

Thermal printing is known as a method of printing a label on a label surface of an optical recording medium, such as a CD or a DVD.

Patent Document 1 discloses the following technology. Data recorded on a rewritable optical disk can be erased and rewritten. Thus, it is desirable to change the caption written on the printing surface, corresponding to the actual recorded data, before changing the content of the recorded data. From this view point, leuco dye and a leuco dye protective agent are applied on the entire printing surface, excluding a cramping area of a single-sided DVD-RW disk. The DVD-RW disk is rotated at a constant speed while a thermal head bar is brought into contact with the printing surface, including the leuco dye layer, of the DVD-RW disk. A sensor for detecting the rotational position is provided on a spindle motor that rotates the DVD-RW disk. When a reference point is detected during the rotation of the DVD-RW disk, an image recorded on the printing surface is erased by decolorizing the leuco dye with the thermal head bar. When the reference point is detected during the erasing process, the erasing process is ended, and subsequently, image data is recorded on the printing surface by the thermal head on the basis of image data provided in a printing-image data memory. When the reference point is detected during the recording, the recording process is ended.

Patent Document 2 describes a device that carries out printing on a print-recording medium including a thermal coloring layer on a print display surface of an optical recording member. More specifically, while the print-recording medium is rotated, coloring and fixing are carried out using a line thermal head extending in the radial direction of the print-recording medium and cathode fluorescent lamp.

[Patent Document 1] Japanese Unexamined Patent Application Publication No. 2003-341147 (paragraphs [0005], [0016], [0031], and [0032])
[Patent Document 2] Japanese Unexamined Patent Application Publication No. 2000-155989 (paragraphs [0020], [0027], [0028], and Fig. 2)

### DISCLOSURE OF INVENTION

### Means for Solving the Problem

Meanwhile, optical recording media, such as CDs and DVDs are more generally used to add data to the upper limit of the recording capacity of each optical recording medium gradually, rather than to rewrite the entire content of the recorded data. When data is gradually added, printing for displaying the content of the gradually added data must be carried out without misalignment with the previously printed content. There is also a strong need for high quality printing of, not only character data indicating the recorded data content, but also image data.

However, the current technology is not sufficient for additional printing associated with additional recording of data and high quality printing. In Patent Document 1, a single turn of an optical recording medium is determined by a sensor by detecting a reference point. However, with the single-turn detection, it is extremely difficult to print the content of the additionally recorded data without misalignment with the previously printed content. In Patent Document 2, an optical recording medium is merely rotated by a stepping motor, and the rotation is not controlled precisely. In Patent Documents 1 and 2, one-time printing is intended, and additional printing associated with additional recording of data is not intended. Problems may occur in which the additional printing overlapping with the previous printing and the additional printing being carried out far away from where the previous printing were carried out.

This creates a need for the development of a new printing method that allows additional printing in association with additional recording of data and high quality printing.

The present invention has been conceived in light of the problems described above. Accordingly, it is a first object of the present invention to provide a printing method and printing apparatus for an optical recording medium that can suppress misalignment in printing during additional printing associated with additional recording of data, and that enables high-quality label printing when label printing is carried out on an optical recording medium having address information. A second object of the present invention is to provide a printing method and printing apparatus for an optical recording medium and to provide an optical recording medium that allows satisfactory additional printing associated with additional recording of data during printing on a printing layer of an optical recording medium.

### Problem to Be Solved by the Invention

As a result of conducting extensive investigation in response to the above-described problems, the inventor discovered that using address information that is used during recording of data on an optical recording medium or playbacking of the recorded data for position control and position detection of the optical recording medium during printing can suppress displacement in printing when additional printing associated to additional recording of data is carried out, and can carry out high-quality label printing. Consequently, the inventor has completed the present invention.

For example, when the optical recording medium is an optical disk (discoid shape), such as a CD or a DVD, the recording/playback functional layer typically includes a substrate. Address information is recorded concentrically or spirally on this substrate. The address information indicates a specific location on the optical recording medium (optical disk). Before data is recorded at a predetermined location of the optical recording medium (optical disk) or before data recorded at a predetermined location is played back, a laser beam can be accurately moved to the predetermined location according to the address information. In this way, the address information is used as position information on the optical recording medium during recording or playback using the optical recording medium (optical disk). The inventor discovered that the address information, which is position information, on the optical recording medium (optical disk) can be used for rotation control, position control, and position detection of the optical recording medium (optical disk) when label printing is carried out.

For example, when the optical recording medium is an optical card (flat rectangular shape), the recording/playback functional layer typically includes a plurality of recording tracks parallel to each other. Address information is recorded along these recording tracks. The inventor has also discovered that, similar to the case of the above-described optical disk, the address information can be used for rotation control, position control, and position detection of the optical recording medium (optical card) when label printing is carried out.

Furthermore, the inventor discovered that, by recording printing data used for printing on an optical recording medium on the optical recording medium itself, the printing device can detect the previous printing location and printing content by reading out the printing data from the optical recording medium before additional printing is carried out, and, in this way, satisfactory additional printing can be carried out. Consequently, the inventor has completed the present invention.

An aspect of the present invention provides a printing method applied to an optical recording medium having a recording/playback functional layer enabling recording or playback by a laser beam, an information recording/playback surface irradiated with the laser beam, and a printing layer separated from the information recording/playback surface by the recording/playback functional layer, wherein address information used for recording or playback is recorded on the recording/playback functional layer, the printing method including the steps of: detecting the address information by irradiating the information recording/playback surface with the laser beam; and carrying out printing on the printing layer using the detected address information. (Claim 1)

Preferably, the printing method includes the steps of detecting position information of the optical recording medium on the basis of the detected address information; controlling the position of the optical recording medium using the position information; and carrying out the printing on the printing layer in synchronization with the position information. (Claim 2)

Preferably, the printing method includes the steps of controlling the position of the optical recording medium using the detected address information; and carrying out the printing on the printing layer in synchronization with the detected address information. (Claim 3)

Preferably, the printing method includes the steps of detecting position information of the optical recording medium on the basis of the detected address information; and carrying out the printing on the printing layer in synchronization with the position information. (Claim 4)

Preferably, the printing method includes the step of reading out printing data for the printing from an external storage device or the optical recording medium. (Claim 5)

Preferably, the printing method includes the step of recording the printing data for the printing on the optical recording medium on which printing has been carried out, after the printing. (Claim 6)

Preferably, the printing method includes the step of carrying out thermal printing on a thermosensitive color layer, wherein the printing layer is the thermosensitive color layer. (Claim 7)

Preferably, the printing method includes the step of the recording/playback functional layer includes the reflective sublayer, the address information being recorded in a region provided with the reflective sublayer. (Claim 8)

Preferably, the printing method includes the step of detecting the address information by irradiating the information recording/playback surface with the laser beam while rotating the optical recording medium, wherein the recording/playback functional layer includes a substrate, and the address information is recorded concentrically or spirally on the substrate. (Claim 9)

Preferably, the printing method includes the step of detecting the address information by irradiating the information recording/playback surface with the laser beam while moving the optical recording medium parallel or perpendicular to a plurality of recording tracks, wherein the recording/playback functional layer includes the recording tracks formed parallel to each other, and the address information is recorded along the recording tracks. (Claim 10)

Another aspect of the present invention provides a printing method applied to an optical recording medium having a recording/playback functional layer enabling recording or playback by a laser beam, an information recording/playback surface irradiated with the laser beam, and a printing layer separated from the information recording/playback surface by the recording/playback functional layer, the printing method including the steps of carrying out printing on the printing layer; and recording printing data for the printing on the optical recording medium. (Claim 11)

Preferably, the printing method includes the step of recoding the printing data for printing on the optical recording medium while carrying out the printing. (Claim 12)

Preferably, the printing data is data about a printing content and a printing position. (Claim 13)

Preferably, the printing method includes the steps of reading out the printing data recorded on the optical recording medium when additional printing is to be carried out on the optical recording medium on which printing has been carried out; and carrying out the additional printing after confirming characters and/or images printed on the optical recording medium and a printing position on the printing layer. (Claim 14)

Preferably, the printing method includes the step of carrying out thermal printing on a thermosensitive color layer, wherein the printing layer is the thermosensitive color layer. (Claim 15)

Preferably, the printing method includes the step of carrying out the printing on the printing layer while rotating the optical recording medium, wherein the optical recording medium is shaped as a flat ring. (Claim 16)

Preferably, the printing method includes the step of carrying out the printing on the printing layer while moving the optical recording medium parallel or perpendicular to a plurality of recording tracks, wherein the optical recording medium includes the recording tracks formed parallel to each other. (Claim 17)

Preferably, the printing method includes the step of carrying out additional printing at a desired position on the printing layer on the basis of a relative positional relationship between a printing position on the printing layer and an irradiation position of the laser beam when characters and/or images are already printed on the printing layer. (Claim 18)

Preferably, the printing method includes the step of reading out the relative positional relationship from an external storage device. (Claim 19)

Preferably, the printing method includes the step of determining the relative positional relationship by detecting the characters and/or images printed on the printing layer. (Claim 20)

Preferably, the printing method includes the step of detecting positions of characters and/or images printed on the printing layer in synchronization with the address information.
(Claim 21)

Preferably, the printing method includes the step of determining the relative positional relationship by detecting a mark provided on the optical recording medium.
(Claim 22)

Preferably, the printing method includes the step of determining the relative positional relationship by detecting the address information. (Claim 23)

Another aspect of the present invention provides an optical recording medium on which printing and recording of the printing data have been carried out by the aforementioned printing method. (Claim 24)

Preferably, the optical recording medium further includes a mark for determining the relative positional relationship between a printing position on the printing layer and an irradiation position with the laser beam.
(Claim 25)

Another aspect of the present invention provides a printing device for carrying out printing on a printing layer of an optical recording medium, the optical recording medium having a recording/playback functional layer enabling recording or playback by a laser beam, an information recording/playback surface irradiated with the laser beam, and the printing layer separated from the information recording/playback surface by the recording/playback functional layer, wherein address information for recording or playback is recorded on the recording/playback functional layer, the printing device including driving means for driving the optical recording medium; detecting means for irradiating the optical recording medium with the laser beam and detecting the address information; printing means for carrying out printing; and instructing means for controlling the printing means to carry out the printing using the address information detected by the detecting means. (Claim 26)

Preferably, in the printing device, the instructing means includes position-information detecting means for converting the address information detected by the detecting means into position information and controlling means for controlling the driving means and the printing means on the basis of the position information detected by the position-information detecting means. (Claim 27)

Preferably, in the printing device, the instructing means includes drive control means for controlling the driving means using the address information detected by the detecting means; and print control means for controlling the printing means using the address information detected by the detecting means. (Claim 28)

Preferably, in the printing device the instructing means includes position-information detecting means for converting the address information detected by the detecting means into position information; and print control means for controlling the printing means on the basis of the position information detected by the position-information detecting means. (Claim 29)

Preferably, the printing device further includes storing means for storing printing data used for the printing. (Claim 30)

Preferably, the printing device further includes recording/reading means for recording the printing data used for the printing on the optical recording medium on which printing has been carried out and for reading out the recorded printing data. (Claim 31)

Preferably, the printing device further includes displaying means for displaying an image of the optical recording medium on which printing is carried out. (Claim 32)

Preferably, in the printing device, the printing layer is a thermosensitive color layer and the printing means is thermal printing means. (Claim 33)

Preferably, in the printing device, the recording/playback functional layer includes a substrate, and the address information is recorded concentrically or spirally on the substrate, and the driving means is rotating means for rotating the optical recording medium.
(Claim 34)

Preferably, in the printing device, the recording/playback functional layer includes a plurality of recording tracks formed parallel to each other, and the address information is recorded along the recording tracks, and the driving means is moving means for moving the optical recording medium parallel or perpendicular to the recording tracks. (Claim 35)

Another aspect of the present invention provides a printing device for carrying out printing on a printing layer of an optical recording medium, the optical recording medium having a recording/playback functional layer enabling recording or playback by a laser beam, an information recording/playback surface irradiated with the laser beam, and the printing layer separated from the information recording/playback surface by the recording/playback functional layer, the printing device including driving means for driving the optical recording medium; printing means for carrying out the printing; and recording means for recording the printing data for the printing on the optical recording medium. (Claim 36)

Preferably, in the printing device, the printing data is data on a printing content and a printing position. (Claim 37)

Preferably, the printing device further includes storing means for storing printing data. (Claim 38)

Preferably, in the printing device, the recording means has a readout function for reading out the printing data recorded on the optical recording medium. (Claim 39)

Preferably, the printing device further includes displaying means for displaying an image of the optical recording medium on which printing is to be carried out.
(Claim 40)

Preferably, in the printing device, the printing layer is a thermosensitive color layer and the printing means is thermal printing means. (Claim 41)

Preferably, in the printing device, the optical recording medium is shaped as a flat ring, and the driving means is rotating means for rotating the optical recording medium. (Claim 42)

Preferably, in the printing device, the optical recording medium includes a plurality of recording tracks formed parallel to each other, and the driving means is moving means for moving the optical recording medium parallel or perpendicular to the recording tracks. (Claim 43)

Preferably, in the printing device, the printing means carries out additional printing at a desired position on the printing layer on the basis of a relative positional relationship between a printing position on the printing layer for the printing means and an irradiation position with the laser beam for the detecting means when characters and/or images are already printed on the printing layer.
(Claim 44)

Preferably, the printing device further includes storing means for storing the relative positional relationship. (Claim 45)

Preferably, the printing device further includes an image sensor for detecting characters and/or images printed on the printing layer, wherein the printing means detects the relative positional relationship on the basis of the detection result of the characters and/or images by the image sensor. (Claim 46)

Preferably, in the printing device, the image sensor detects the positions of the characters and/or images in synchronization with the detection of the address information by the detecting means. (Claim 47)

Preferably, in the printing device, the image sensor is a line image sensor. (Claim 48)

Preferably, the printing device further includes an image sensor for detecting a mark provided on the optical recording medium, wherein the printing means detects the relative positional relationship on the basis of the detection result of the mark by the image sensor. (Claim 49)

Preferably, in the printing device, the image sensor is a position sensor. (Claim 50)

Preferably, in the printing device, the printing means detects the relative positional relationship on the basis of the detection result of the address information by the detecting means. (Claim 51)

### Advantages

According to the present invention, label printing while the optical recording medium is moved can suppress displacement in printing when additional printing associated to additionally recording of data is carried out, and can carry out high-quality label printing.

Since the printing data used for the previous printing is recorded on the optical recording medium itself, the printing device can detect the previous printing location and printing content by reading out the printing data from the optical recording medium before additional printing is carried out, and, in this way, satisfactory additional printing can be carried out.

### BRIEF DESCRIPTION OF DRAWINGS

[Fig. 1] Fig. 1 is a schematic perspective view illustrating an optical recording medium (optical disk) .
[Fig. 2] Figs. 2(a) and 2(b) are schematic cross-sectional views taken along plain A-A' of the optical recording medium M shown in Fig. 1; Fig. 2(a) shows a case in which the optical recording medium M is a substrate-incident type optical recording medium; and Fig. 2(b) shown a case in which the optical recording medium M is film-incident type optical recording medium.
[Fig. 3] Figs. 3(a) and 3(b), for example, are functional block diagrams of the structure of the printing device according to a first embodiment of the present invention; Fig. 3(a) illustrates the structure of the printing device simultaneously carrying out rotation control of the optical recording medium and printing using the address information; and Fig. 3(b) illustrates the structure of the printing device carrying out printing using the address information.
[Fig. 4] Fig. 4 is a schematic perspective view of part of the printing device (a part represented by reference numeral 101) illustrated in Figs. 3(a) and 3(b).
[Fig. 5] Figs. 5(a) to 5(c) are functional block diagrams of the specific example of the structure of the instructing means of the printing device illustrated in Figs. 3 (a) and 3 (b) ; Figs. 5 (a) and 5 (b) illustrate the specific example of the structure of the instructing means of the printing device illustrated in Fig. 3(a); and Fig. 5(c) illustrates the specific example of the structure of the instructing means of the printing device illustrated in Fig. 3 (b) .
[Fig. 6] Fig. 6 is a schematic cross-sectional view illustrating the main elements of a printing device according to a second embodiment of the present invention.
[Fig. 7] Figs. 7(a) and 7(b) are schematic views of the main elements of a printing device according to a modification of the second embodiment; Fig. 7(a) is a top view of part of the printing device; and Fig. 7(b) is a cross-sectional view of part of the printing device.
[Fig. 8] Fig. 8 is a schematic plan view showing an example of an optical recording medium (optical card).
[Fig. 9] Fig. 9 is a schematic cross-sectional view taken along plain B-B' of the optical recording medium P shown in Fig. 8.
[Fig. 10] Figs. 10(a) and 10(b) are functional block diagrams illustrating the structure of a printing device according to a third embodiment of the present invention.
[Fig. 11] Fig. 11 is a schematic perspective view of part of the printing device shown in Figs. 10(a) and 10(b).
[Fig. 12] Figs. 12(a) to 12(c) are functional block diagrams illustrating the structure of instructing means of the printing device shown in Figs. 10(a) and 10(b).
[Fig. 13] Figs. 13(a) and 13(b) are schematic views of the main elements of a printing device according to the fourth embodiment of the present invention.
[Fig. 14] Fig. 14 is a schematic perspective view of part of a printing device (represented by reference numeral 101) including a line image sensor 52.
[Fig. 15] Figs. 15(a) and 15(b) are plan views of the top of part of the printing device illustrated in Fig. 14.
[Fig. 16] Fig. 16 is a schematic plan view of part of a printing device (represented by reference numeral 101) including a position sensor 53.
[Fig. 17] Figs. 17(a) and 17(b) are schematic plan views of part of the printing device (represented by reference numeral 101) including the position sensor 53.
[Fig. 18] Figs. 18(a) and 18(b) are schematic plan views of part of the printing device (represented by reference numeral 101) including the position sensor 53.
[Fig. 19] Fig. 19 is a schematic plan view of part of the printing device (represented by reference numeral 101) including a position sensor 53.
[Fig. 20] Figs. 20(a) to 20(c) are schematic plan views of part of a printing device (represented by reference numeral 101) according to another embodiment using the position sensor 53.

### Description of Reference Numerals

- 1 and 23:: substrate
- 2 and 24:: recording/playback functional layer
- 3 and 26:: information recording/playback surface
- 4 and 25:: printing layer
- 5:: center hole
- 6:: recording/playback region
- 10 and 11:: optical pickup
- 12 and 120:: objective lens
- 13 and 130:: focused beam
- 14, 140, and 1400:: thermal head
- 14a:: spring
- 15 and 150:: backup roller
- 16:: servomotor
- 19:: turntable
- 20:: recording track
- 21:: tracking track
- 22:: recording pit
- 27:: tray
- 29:: conveying roller
- 30:: clamp
- 31 and 310:: address-information detecting unit
- 32 and 320:: recording/reading means
- 33:: backup roller
- 33a:: independent roller
- 33b:: shaft
- 50a, 50b, and 50c:: upper roller
- 51a, 51b, and 51c:: lower roller
- 52:: line image sensor
- 53:: position sensor
- 54:: mark
- 100 and 1000:: printing device
- 101 and 1010:: part of printing device
- 160:: backup ball
- N:: pixel of test printing
- M and P:: optical recording medium
- S and S':: instructing means
- K and K':: storage means
- H and H':: displaying means
- I and I':: position-information detecting means
- C and C':: controlling means
- RC:: rotation control means
- PRC and PRC':: print control means
- X:: rotation-reference-signal generating means
- TC:: movement control means
- Y:: movement-reference-signal generating means

### BEST MODE FOR CARRYING OUT THE INVENTION

Embodiments of the present invention will be described below with reference to the drawings. However, the present invention is not limited to the following embodiments, and modifications may be made accordingly within the scope of the invention. The components included in the embodiments may be properly combined with each other in the scope of the present invention.

An optical recording medium used for a first printing method according to the present invention includes a recording/playback functional layer enabling recording or playback by a laser beam, an information recording/playback surface irradiated with the laser beam, and a printing layer separated from the information recording/playback surface by the recording/playback functional layer, wherein address information used for recording or playback is recorded on the recording/playback functional layer. The first printing method includes the steps of detecting the address information by irradiating the information recording/playback surface with the laser beam; and carrying out printing on the printing layer using the detected address information.

Another optical recording medium used for a second printing method according to the present invention includes a recording/playback functional layer enabling recording or playback by a laser beam, an information recording/playback surface irradiated with the laser beam, and a printing layer separated from the information recording/playback surface by the recording/playback functional layer. The second printing method includes the steps of carrying out printing on the optical recording medium; and recording printing data for the printing on the optical recording medium.

(A) Optical recording medium:
   A variety of optical recording media may be used so long as the media are recordable and can be played back with a laser beam.

The optical recording medium used for the first printing method according to the present invention may be, for example, an optical recording medium whose recording/playback functional layer includes a substrate on which address information is recorded concentrically or spirally. In this case, the laser beam is incident on an information-recording playback surface while the optical recording medium is rotated so as to detect the address information, and then printing is carried out on the printing layer using the detected address information. Typical examples of such optical recording media include optical disks (flat, circular plates), such as a CD and a DVD.

Moreover, for example, the optical recording medium may be an optical recording medium whose recording/playback functional layer has a plurality of parallel recording tracks, along which address information is recorded. In this case, the information recording/playback surface is irradiated with the laser beam to detect address information while the optical recording medium is moved parallel or vertical to the recording tacks, and then printing is carried out on the printing layer using the detected address information. A typical example of such an optical recording medium is an optical card of a flat rectangular plate.

The optical recording medium used for the second printing method according to the present invention may be, for example, a flat, discoid optical recording medium, in which printing to the printing layer of the optical recording medium is carried out while the optical recording medium is rotated. In this case, it is usual to record printing data while the optical recording medium is rotated. Typical examples of such optical recording media include optical disks, such as a CD and a DVD.

Moreover, for example, the optical recording medium may be an optical recording medium whose recording/playback functional layer has a plurality of parallel recording tracks, and printing on the printing layer is carried out while the optical recording medium is moved in a direction parallel or vertical to the recording tracks. In this case, it is usual to record printing data while the optical recording medium is moved parallel or vertical to the recording tracks. A typical example of such an optical recording medium is an optical card of a flat rectangular plate.
Examples of using an optical disk and an optical card as optical recording media will be described below.

(1) An embodiment of the optical recording medium is an optical disk (throughout this section, "optical recording medium" refers to an optical disk):
   When address information is recorded on an optical recording medium, the address information is usually recorded concentrically or spirally on a substrate. Therefore, the address information can be detected at any radius of the optical recording medium. Since a drive that carries out recording and playback of the optical recording medium usually starts reading out address information after optimizing the readout conditions at the inner circumference, it is advantageous to detect address information at the inner circumference. By detecting the address information in this way, the address information can be read out in a short period of time after the optical recording medium is inserted into the drive. Since the address information of the optical recording medium is recorded by constant linear velocity (CLV) recording, the density of address information per unit angle increases and the resolution also increases toward the outer circumference. Therefore, it is advantageous to detect the address information at the outer circumference because printing position control can be carried out at higher accuracy.

In CLV recording, the rotational speed of the disk varies depending on the position (radius) at which an address is detected. Standard drives support CLV recording. Therefore, for a drive that supports CLV recording, the radial position at which the address is detected may be changed in response to the rotational speed used for label printing.

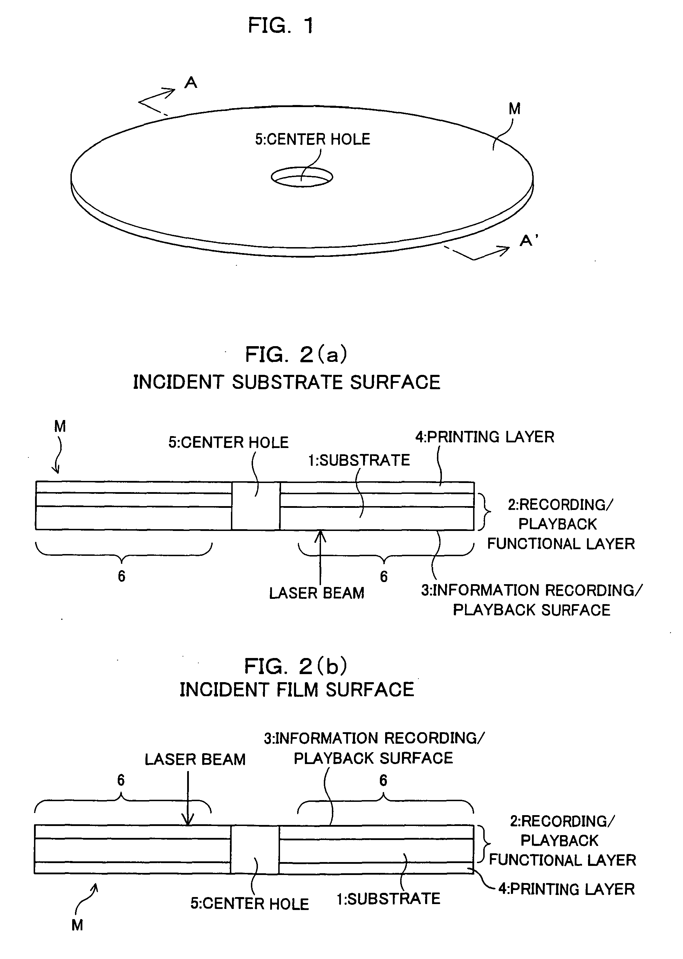

Fig. 1 is a schematic perspective view illustrating an optical recording medium. As shown in Fig. 1, an optical recording medium M is a disk having a center hole 5 at the center. However, the shape of the optical recording medium M is not limited to a disk. To enhance design, the optical recording medium M may be a flat, oval or regular polygonal plate.

Figs. 2(a) and 2(b) are both schematic cross-sectional views taken along plain A-A' of the optical recording medium M shown in Fig. 1. More specifically, Fig. 2(a) shows a case in which the optical recording medium M is a substrate-incident type optical recording medium, whereas Fig. 2(b) shows a case in which the optical recording medium M is film-incident type optical recording medium. As shown in Figs. 2(a) and 2(b), the optical recording medium M includes a recording/playback functional layer 2 having a substrate 1, an information recording/playback surface 3, and a printing layer 4.

In Fig. 2(a), the lower surface of the recording/playback functional layer 2 (more specifically, the substrate 1) comprises the information recording/ playback surface 3. A laser beam passes through the substrate 1 from the information recording/playback surface 3 and enters the inside of the recording/playback functional layer 2. The printing layer 4 and the information recording/playback surface 3 are separated by the recording/playback functional layer 2.

In Fig. 2(b), the upper surface of the recording/playback functional layer 2 comprises the information recording/playback surface 3. The laser beam is incident on the recording/playback functional layer 2. The substrate 1 is provided on the lower side of the recording/playback functional layer 2. By providing the printing layer 4 on the lower surface of the substrate 1, the recording/playback functional layer 2 is interposed between the information recording/playback surface 3 and the printing layer 4.
The components included in the optical recording medium M will be described below.

(1-1) Recording/playback functional layer:
The recording/playback functional layer 2 includes the substrate 1.
Materials for the substrate 1 may be plastic, metal, glass and the like, having suitable workability and rigidness. However, when metal or glass is used as the material for the substrate 1, a light-curable or thermally-curable thin resin layer is required on the surface to form guide grooves as described below. Therefore, it is preferred to form the shape of the substrate 1 (disk shape, in particular) and the guiding grooves on the surface at once by injection molding using a plastic material for the substrate 1.

Examples of the injection-moldable plastic materials include polycarbonate resins, polyolefin resins, acrylic resins, and epoxy resins, which are used in known CDs and DVDs. It is preferable that the thickness of the substrate 1 be at approximately 0.5 to 1.2 mm.

In the substrate-surface incident type optical recording medium M, shown in Fig. 2(a), the laser beam passes through the substrate 1 during recording and playback of information. Therefore, materials that are transparent to the incident laser beam are used as materials for the substrate 1. In contrast, in the film-surface incident type optical recording medium M, shown in Fig. 2(b), usually the laser beam does not pass through the substrate 1. Therefore, the substrate 1 does not have to be transparent to the laser beam.

Although not shown in Figs. 2(a) and 2(b), address information is concentrically or spirally recorded on the substrate 1. The address information is usually recorded by forming concentrically or spirally meandering guiding grooves for tracking on the substrate 1 or forming pits in a concentric or spiral array on the substrate 1. Such address information may be added by a well-known method.

The track pitch of the guiding grooves for tracking differs depending on the wavelength of the laser beam used for recording and playback of the optical recoding medium. More specifically, for a CD optical recoding medium, the track pitch is usually 1.5 to 1.6 µm. For a DVD optical recoding medium, the track pitch is usually 0.7 to 0.8 µm. For an optical recoding medium for a blue laser beam, the track pitch is usually 0.2 to 0.5 µm. The groove depth also differs depending on the wavelength of the laser beam used for recording and playback of the optical recoding medium. More specifically, for a CD optical recoding medium, the groove depth is usually 10 to 300 nm. For a DVD optical recoding medium, the groove depth is usually 10 to 200 nm. For an optical recoding medium for a blue laser beam, the groove depth is usually 10 to 200 nm.

If a plastic material is used for the substrate 1, the disk shape and the guiding grooves on the surface are formed through a single step, for example, injection molding. If metal or glass is used for the substrate 1, for example, a thin resin layer of light-curable or thermally-curable resin is provided, and the guiding grooves are formed on this resin layer.

The recording/playback functional layer 2 allows recoding and playback by a laser beam.
The recording/playback functional layer 2 may have different layer structures suitable for the types of the optical recording medium M, for example, a read-only medium (ROM medium), a write-once medium that can be used for recording only once (Write Once medium), or a rewritable medium that allows repeated recording and erasing (ReWritable medium). The recording/playback functional layer 2 has different layer structures for the substrate-surface incident type (in the case of Fig. 2(a)) and the film-surface incident type (in the case of Fig. 2(b)).

### (Embodiment of read-only medium)

For a read-only medium, the recording/playback functional layer 2 usually includes a reflective layer and a protective layer provided on the substrate 1. The substrate 1 has been described above. Materials normally used for the reflective layer include metals, such as Al, Ag, and Au, and alloys of such metals. Materials normally used for the protective layer include UV-curable resins and the like. Alternatively, the protective layer may be a plate member made of, for example, resin, such as polycarbonate, or metal. The layer structure of the read-only medium is the same for the substrate-surface incident type and the film-surface incident type.

For a read-only medium, the recording/playback functional layer 2 is usually formed as described below. First, a reflective layer is formed on the substrate 1 by sputtering. Then, UV-curable resin is applied on the reflective layer. The applied resin film is cured to form a protective layer. When a plate member is used as the protective layer, the plate member is bonded on the reflective layer using an adhesive.

### (First embodiment of write-once medium)

For a write-once medium of film-surface incident type, the recording/playback functional layer 2 is usually produced by providing a reflective layer, a recording layer and a protective layer on the substrate 1, in this order. A buffer layer formed of inorganic material (for example, ZnS/SiO₂) may be interposed between the recording layer and the protective layer.

In the case of a write-once medium of substrate-surface incident type, the recording/playback functional layer 2 is usually produced by providing a recording layer, a reflective layer, and a protective layer on the substrate 1 in this order.

The substrate 1 is described above. Materials normally used for the reflective layer include metals, such as Al, Ag, and Au, and alloys of such metals. Materials normally used for the protective layer include UV-curable resins. Alternatively, the protective layer may be a plate member made of resin (for example, polycarbonate) or metal. The method of forming the reflective layer and the protective layer may be the same as that for the read-only medium. When a plate member of resin (for example, polycarbonate) or metal is used, the member may be bonded to the recording layer, the buffer layer, or the reflective layer using an adhesive.

Materials usually used for the recording layer of the write-once medium are organic dyes. Such organic dyes include macrocyclic aza-annulene dyes such as phthalocyanine dyes, naphthalocyanine dyes, and porphyrin dyes; polymethine dyes such as cyanine dyes, merocyanine dyes, and squarylium dyes; anthraquinone dyes; azulenium dyes; metal-complex azo dyes; and metal-containing indoaniline dyes. In particular, metal-complex azo dyes are preferable because they have excellent durability and light resistance.

To form a recording layer using an organic dye, a solution prepared by dissolving the organic dye in an appropriate solvent is applied by spin coating, spray coating, dip coating, or roll coating, for example. In this case, examples of the solvent preferably used include ketone and alcohol solvents such as diacetone alcohol and 3-hydroxy-3-methyl-2-butanone; cellosolve solvents such as methyl cellosolve and ethyl cellosolve; perfluoroalkylalcohol solvents such as tetrafluoropropanol and octafluoropentanol; and ester solvents such as methyl lactate and methyl isopropionate.

The thickness of the recording layer is not limited since the suitable film thickness varies depending on the recording method. However, to achieve a sufficient level of modulation, the film thickness is usually 5 nm or greater, preferably 10 nm or greater, and more preferably 20 nm or greater. Since the recording layer must transmit light, the film thickness is usually 3 µm or smaller, preferably 1 µm or smaller, and more preferably 200 nm or smaller.

### (Second embodiment of write-once medium)

For a write-once medium of film-surface incident type, the recording/playback functional layer 2 is usually produced by providing a reflective layer, a dielectric layer, a recording layer, a dielectric layer, and a protective layer on the substrate 1, in this order.

For a write-once medium of substrate-surface incident type, the recording/playback functional layer 2 is usually produced by providing a dielectric layer, a recording layer, a dielectric layer, a reflective layer, and a protective layer on the substrate 1, in this order.

The substrate 1 is described above. Materials normally used for the reflective layer include metals, such as Al, Ag, and Au, and alloys of such metals. Materials normally used for the protective layer include UV-curable resins. Alternatively, the protective layer may be a plate member made of resin (for example, polycarbonate) or metal. The method of forming the reflective layer and the protective layer may be the same as that for the read-only medium.

Materials normally used for the dielectric layer include inorganic materials (for example, ZnS/SiO₂). The dielectric layer is usually formed by sputtering.

The recording layer is usually made of an inorganic material (for example, a chalcogen alloy, such as Ge·Te or Ge·Sb·Te). The recording layer is usually formed by sputtering. The thickness of the recording layer is usually approximately 1 to 50 nm.

### (First embodiment of rewritable medium)

For a rewritable medium of film-surface incident type, the recording/playback functional layer 2 is usually produced by providing a reflective layer, a dielectric layer, a recording layer, a dielectric layer, and a protective layer on the substrate 1, in this order. For a rewritable medium of substrate-surface incident type, the recording/playback functional layer 2 is usually produced by providing a dielectric layer, a recording layer, a dielectric layer, a reflective layer, and a protective layer on the substrate 1, in this order.

The substrate 1 is described above. Details of the reflective layer, the dielectric layer, the recording layer, and the protective layer are basically the same as those in the above-described "Second embodiment of write-once medium". However, materials for the recording layer must enable recording and erasing in a reversible manner. Examples of such materials include SbTe, GeTe, GeSbTe, InSbTe, AgSbTe, AgInSbTe, GeSb, GeSbSn, InGeSbTe, and InGeSbSnTe materials. To increase the crystallization rate, it is preferable to use a composition including Sb as a main component for the recording layer.

### (Second embodiment of rewritable medium)

Another specific embodiment of the rewritable medium is a magneto-optical recording medium (MO disk).

### (Common elements)

The recording/playback functional layer 2 includes a recording/playback region 6. As shown in Fig. 1, in the case of a disk-shaped optical recording medium M having a center hole 5, the recording/playback region 6 is usually provided in a range defined by a smaller diameter larger than the inner diameter of the recording/playback functional layer 2 and a larger diameter smaller than the outer diameter of the recording/playback functional layer 2 (see Figs. 2(a) and 2(b)).

If required, one or more other layers (for example, adhesive layer) may be interposed between the recording/playback functional layer 2 and the printing layer 4 (see Fig. 2(a)) or between the substrate 1 and the printing layer 4 (see Fig. 2(b)).

In the above-described "Embodiment of read-only medium", "First embodiment of write-once medium", "Second embodiment of write-once medium", and "First embodiment of rewritable medium", a plurality of recording layers may be provided to increase the recording capacity. When a plurality of recording layers are provided, from a viewpoint of increasing the recording capacity, it is usually preferable to provide two or more recording layers and more preferably, three or more recording layers. However, the number of recording layers is usually five or less.

In the case of an optical recording medium M including a reflective layer, it is preferable to set the relationship between the reflective layer and address information, which is used for rotation control, position control, and position detection during printing on the printing layer 4, as follows. In other words, it is preferable to detect the address information of the optical recording medium M and carry out printing on the printing layer 4 using the address information (preferably while the rotation position of the optical recording medium M is controlled). Preferably, the address information should be recorded in the region of the reflective layer. This achieves high reflectance and more reliable detection of the address information.

Optical recording media M actually in practical use include, for example, CDs, CD-ROMs, CD-RWs (ReWritable), DVD-ROMs, write-once DVDs, and rewritable DVDs.

### (1-2) Printing layer:

The printing layer 4 carries out label printing. The printing layer 4 is made of a material suitable for the printing method (for example, inkjet printing or thermal printing) to be employed. However, thermal printing is preferred since printing can be carried out during the rotation of the optical recording medium M and since rotation of the optical recording medium M enables highspeed printing.

In the case of thermal printing, the printing layer 4 includes a thermosensitive color layer. Such a thermosensitive color layer is not limited, and any well-known layer may be used. For example, the thermosensitive color layer may contain a pigment and a coupler encapsulated in microcapsules. Such a thermosensitive color layer develops color when thermal energy exceeding a threshold value is applied, and the pigment and the coupler permeate the microcapsules to react with each other. As a result, printing can be carried out.

The thickness of the printing layer 4 is usually at 0.01 µm or greater, preferably at 0.1 µm or greater, and more preferably at 4 µm or greater. The film thickness within this range is advantageous in that desirable contrast can be easily set during thermal printing. The thickness of the printing layer 4 is usually at 100 µm or smaller, preferably set to 50 µm or smaller, and more preferably set to 20 µm or smaller. The film thickness within this range is advantageous in that the sensitivity of thermal printing can be improved and warpage caused by curing shrinking of the printing layer can be suppressed. In particular, a film thickness between 4 µm and 50 µm leads to formation of the printing layer at low cost by screen printing.

Embodiments of methods of producing the printing layer 4 are described below.
The predetermined materials are dissolved or dispersed into a solvent (for example, toluene) together with a thermoplastic resin, and this is formed into a film on the recording/playback functional layer 2 and substrate 1 by screen printing or spin coating. Then, the printing layer 4 can be formed by applying heat to vaporize the solvent.

The predetermined materials are dissolved or dispersed in a curable resin, and the mixture is formed into a film on the recording/playback functional layer 2 and substrate 1 by screen printing or spin coating. Then, the printing layer can be formed by applying heat or light to cure the curable resin. The curable resin may be photocurable resin or thermally-curable resin.

(2) An embodiment of the optical recording medium being an optical card (throughout this section, "optical recording medium" refers to an optical card):
Usually, an optical recording medium has a plurality of recording tracks formed parallel to each other. When the optical recording medium has address information, the address information is recorded along the recording tracks. Printing data may also be recorded on the optical recording medium. Detection of the address information and recording of the printing data are carried out by scanning a laser beam along the recording tracks. The laser beam may be scanned along any recording track.

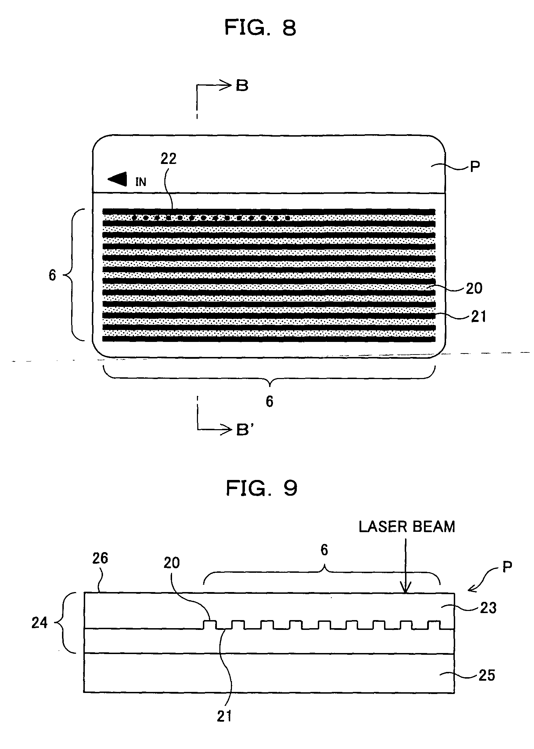

Fig. 8 is a schematic plan view showing an example of an optical recording medium (optical card). As shown in Fig. 8, an optical recording medium P is usually a flat, rectangular plate. As shown in Fig. 8, the four corners of the optical recording medium P are not square but rounded to make handling easy for a user. In the present invention, the rectangular shape also includes that shown in Fig. 8.

As shown in Fig. 8, a plurality of recording tracks 20 are formed along the horizontal direction in the recording/playback region 6, and tracking tracks 21 are each disposed between the two adjacent recording tracks 20. Information is recorded in each recording track 20 as a row of recording pits 22. The address information is recorded along the recording tracks 20.

Fig. 9 is a schematic cross-sectional view taken along plain B-B' of the optical recording medium P shown in Fig. 8. As shown in Fig. 9, the optical recording medium P includes a recording/playback functional layer 24 having a substrate 23, an information recording/playback surface 26, and a printing layer 25.

As shown in Fig. 9, the upper surface of the recording/playback functional layer 24 (more specifically, the substrate 23) is the information recording/playback surface 26. A laser beam passes through the information recording/playback surface 26 and the substrate 23 and enters the recording/playback functional layer 24. The printing layer 25 and the information recording/playback surface 26 are separated by the recording/playback functional layer 24.

(2-1) Recording/playback functional layer:
The recording/playback functional layer 24 includes the substrate 23. The substrate 23 may be composed of a material that transmits a laser beam. The same materials for the optical disk described above may be used. More specifically, polycarbonate resins, polyolefin resins, acrylic resins, or epoxy resins may be used. The thickness of the substrate 1 is usually at 10 µm to 10 mm. In the case of a thin substrate 23 that precludes handling, a support substrate having a predetermined thickness may be interposed between the recording/playback functional layer 24 and the printing layer 25.

The plurality of the recording tracks 20 are formed parallel to each other on the substrate 23. Address information is recorded along the recording tracks 20. The address information may be recorded in the same way as in the optical disk, as described above. For example, in Fig. 8, the recording tracks 20 are formed linearly to make the drawing easily viewable. Alternatively, the address information may be recorded by forming meandering recording tracks 20. In another embodiment, for example, the address information may be recorded by forming slits or pits in the tracking tracks 21 (not shown in Figs. 8 and 9).

When the substrate 23 is made of a plastic material, the rectangular plate and the recording tracks 20 and the tracking tracks 21 on the surface can be formed in one shot by, for example, injection molding.

The recording/playback functional layer 24 allows recoding and playback by a laser beam. The recording/playback functional layer 24 may have any layer structure suitable for the type of the optical recording medium P, for example, a read-only medium (ROM medium), a write-once medium that can be used for recording only once (Write Once medium), or a rewritable medium that allows repeated recording and erasing (ReWritable medium). This is the same as that for the above-described optical disk. In other words, the recording/playback functional layer 24 may have the layer structure of the above-described optical disk.

### (2-2) Printing layer:

The printing layer 25 carries out label printing. The printing layer 25 is made of a material suitable for the printing method (for example, inkjet printing or thermal printing) to be employed. However, thermal printing is preferred since printing may be carried out while the address information on the optical recording medium P is being detected or while printing data is being recorded on the optical recording medium P.

Details of the printing layer 25 (for example, the material for the printing layer 25, the film thickness of the printing layer 25, and the method of producing the printing layer 25) may be the same as those of the above-described optical disk. Therefore, descriptions of these details are omitted here.

### (B) Printing method and device:

In the printing method for an optical recording medium according to the present invention, address information is detected by irradiating the information recording/playback surface of the optical recording medium with a laser beam. Then, the printing is carried out on the printing layer using the detected address information.

A specific printing device for carrying out a first printing method according to the present invention (printing device for the optical recording medium according to the present invention) includes driving means for driving the optical recording medium, detecting means for irradiating the optical recording medium with the laser beam and detecting the address information, printing means for carrying out printing, and instructing means for controlling the printing means to carry out printing by using the address information detected by the detecting means.

A specific printing device for carrying out a second printing method according to the present invention (printing device for the optical recording medium according to the present invention, which may be simply referred to as "printing device according to the present invention" hereinafter) includes driving means for driving the optical recording medium, printing means for carrying out printing, and recording means for recording printing data for the printing on the optical recording medium.

Various modifications may be made to the printing method and printing device according to the present invention within the scope of the present invention. Such a printing device may be any structure depending on the type of optical recording medium (for example, optical disk or optical card) to be used. Embodiments of the printing device will be described below on a case of use of an optical disk as the optical recording medium and a case of an optical card as the optical recording medium.

In this specification, the phrases "in synchronization with position information" and "in synchronization with address information" refer to various types of synchronization that can be achieved between the position information and the address information, such as synchronization between the input/output timings of the position information or the address information, and the synchronization between the changes in the phases, angles, and position represented by the position information or the address information.

(1) An embodiment of a printing device using an optical disk as the recording medium (throughout this section, "optical recording medium" refers to an optical disk):
   As described above, the recording/playback functional layer 2 of the optical recording medium M includes the substrate 1, and address information is recorded concentrically or spirally on the substrate 1. The address information is detected by irradiating the information recording/playback surface 3 with a laser beam while the optical recording medium M is being rotated. Since the address information is recorded concentrically or spirally on the substrate 1, the driving means of the printing device comprises rotating means for rotating the optical recording medium M. A printing device including such rotating means will be described below in detail.

### (1-1) First embodiment:

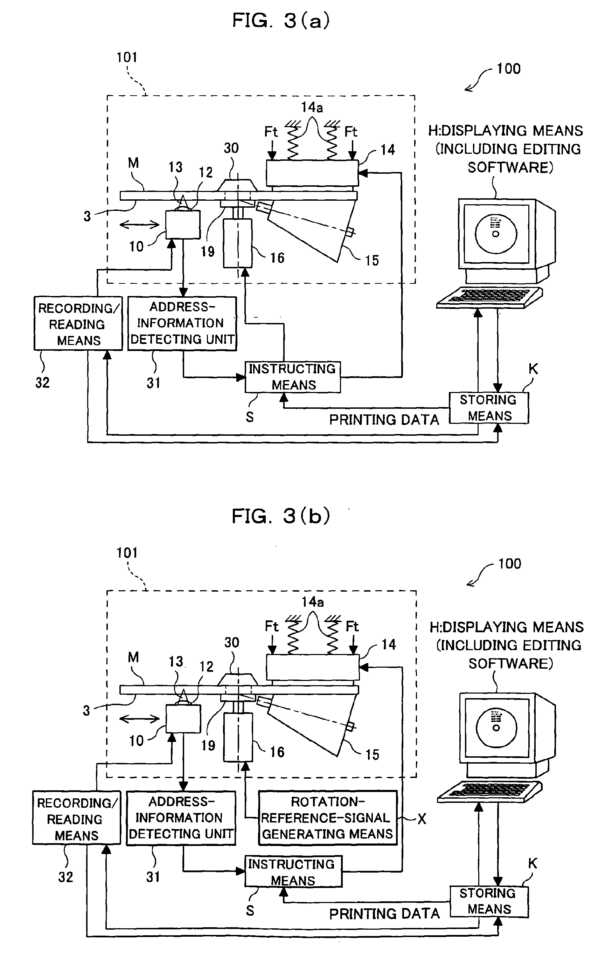

A printing device for an optical recording medium according to a first embodiment (hereinafter may be referred to as "printing device according to the first embodiment") will be described with reference to Figs. 3(a) to 5(c).

Figs. 3(a) and 3(b) are functional block diagrams showing an example of the structure of the printing device according to the first embodiment. More specifically, Fig. 3(a) illustrates the structure of the printing device simultaneously carrying out rotation control of the optical recording medium and printing using the address information; and Fig. 3(b) illustrates the structure of the printing device carrying out printing using the address information. Figs. 3(a) and 3(b) illustrate schematic cross-sectional views of some elements of the printing device.

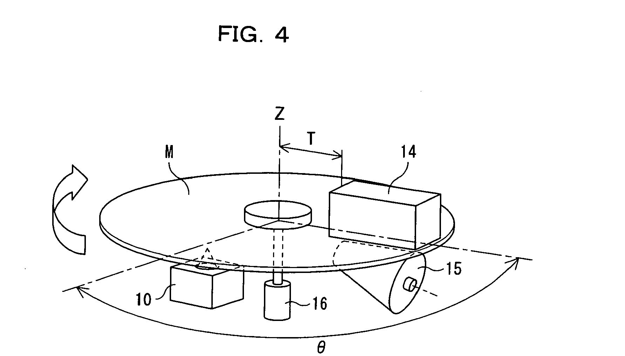

Fig. 4 is a schematic perspective view of part (represented by reference numeral 101) of the printing device illustrated in Figs. 3(a) and 3(b).

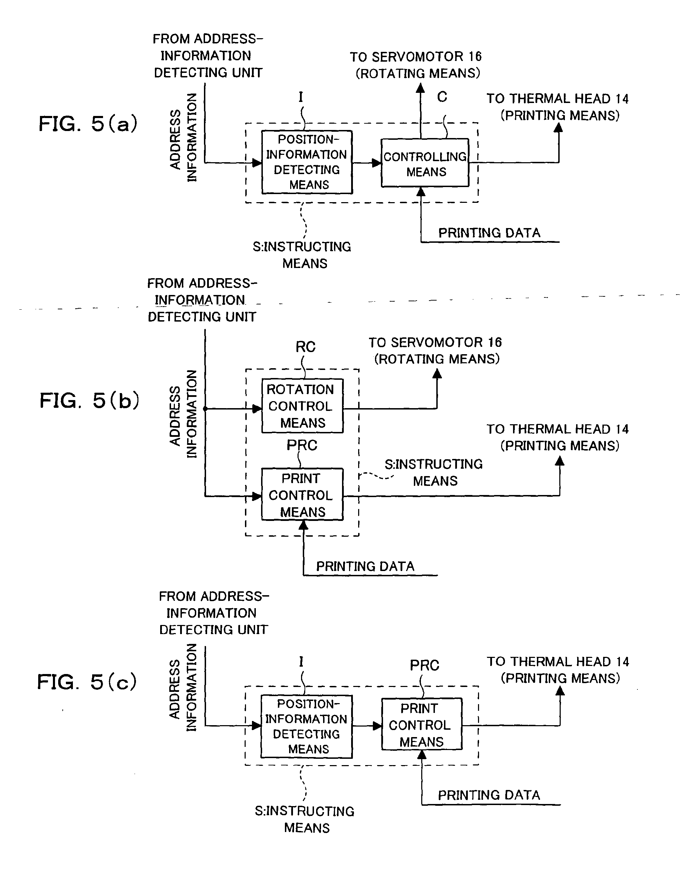

Figs. 5(a) to 5(c) are functional block diagrams showing an example of the structure of the instructing means of the printing device illustrated in Figs. 3(a) and 3(b). More specifically, Figs. 5(a) and 5(b) illustrate the structure of the instructing means of the printing device illustrated in Fig. 3(a); and Fig. 5(c) illustrates the structure of the instructing means of the printing device illustrated in Fig. 3(b).

### (A case in which position control of the optical recording medium using the address information and printing are carried out simultaneously)

First, the printing device that simultaneously carries out position control of the optical recording medium using the address information and printing will be described with reference to Figs. 3(a), 5(a), and 5(b). Position control of the optical recording medium M actually refers to rotation control of the optical recording medium M.

As shown in Fig. 3(a), a printing device 100 includes rotating means having a servomotor 16, a turntable 19, and a clamp 30; detecting means having an optical pickup 10, an objective lens 12, and an address-information detecting unit 31; printing means having a thermal head 14 and a backup roller 15; instructing means S for instructing the rotating means and printing means on the basis of address information from the detecting means and printing data from storing means K; storing means (printing-data storing means) K for storing printing data; recording/reading means 32 for recording printing data on the optical recording medium M or reading out printing data from the optical recording medium M through the optical pickup 10 and the objective lens 12; and displaying means H for displaying an image of the optical recording medium M on which printing has been carried out. Fig. 4 is a schematic perspective view of the part 101 of the printing device surrounded by dotted lines in Fig. 3(a).

Although details of the optical recording medium M are not shown in Figs. 3(a), 3(b), and 4, the optical recording medium M includes a substrate on which address information is recorded concentrically or spirally, a recording/playback functional layer that allows recoding and playback by a laser beam, an information recording/playback surface that is irradiated with a laser beam, and a printing layer that is separated from the information recording/playback surface by the recording/playback functional layer. In Figs. 3(a), 3(b), and 4, the printing layer of the optical recording medium M includes a thermosensitive color layer for thermal printing. Since details of such an optical recording medium M have already been described with reference to Figs. 1, 2(a), and 2(b), descriptions of such details are omitted here.

The optical recording medium M is placed on the turntable 19 and is held from above by the clamp 30 attached to a device cover (not shown). An engagement protrusion having an outer diameter that is substantially the same as the inner diameter of the center hole of the optical recording medium M is provided at the center of the turntable 19 so as to enable centering of the optical recording medium M. In this way, the turntable 19 and the clamp 30 hold the optical recording medium M. The optical recording medium M is rotated by the servomotor 16, around the shaft of the servomotor 16. Usually, the optical recording medium M is rotated at a constant angular velocity (CAV).

The thermal head 14 is in contact with the surface of the printing layer (thermosensitive color layer) of the optical recording medium M. The thermal head 14 is a line thermal head that extends in the radial direction of the optical recording medium M. The thermal head 14 is disposed along the radial direction of the optical recording medium M and is pushed towards the optical recording medium M by a spring 14a attached to the device cover with a pushing force Ft. The thermal head 14 may be a serial head that can scan in the radial direction of the optical recording medium M.

The thermal head 14 may be a thin-film thermal head, a laser thermal head, or an LED thermal head. In particular, a laser thermal head or a LED thermal head is preferred because of easy maintenance as follows. Since printing can be carried out without contacting the optical recording medium M, dusting and contamination on the head do not occur, and cleaning of the thermal head is not required. A further advantage is that printing can be carried out on an uneven surface because of the contactless printing.

On the opposite side of the optical recording medium M from the thermal head 14, the backup roller 15 is disposed in contact with the information recording/playback surface 3 of the optical recording medium M. The backup roller 15 supports the optical recording medium M from the back side against the pushing force Ft by the thermal head 14 from the surface and rotates together with the optical recording medium M. Since the backup roller 15 is disposed such that the thermal head 14 faces the entire recording region pushed by the thermal head 14, the pushing force of the head is uniform, and a high-quality image with uniform recording density can be printed.

More specifically, the backup roller 15 includes a cone-shaped roller whose diameter increases toward the outer circumference of the optical recording medium M. The rotational center line of the cone-shaped roller extends through the center on the back side of the optical recording medium M, and angle between the rotational center line and the back side of the medium defines the angle of the generatrix of the cone. Such a cone-shaped roller can correspond to a difference between the inner and outer linear velocities (the linear velocity increases as the radius from the center of the optical recording medium M increases).

The surface of the backup roller 15 is formed of a soft and elastic material (for example, rubber). By forming the backup roller 15 with such a material, the information recording/playback surface 3 of the optical recording medium M can be more easily protected and vibration and uneven rotation can be dumped.

The address information recorded concentrically or spirally on the optical recording medium M is detected as described below. The optical pickup 10 and the objective lens 12 are moved appropriately in the radial direction, and the optical recording medium M is irradiated with a focused beam 13 focused by the optical pickup 10 and the objective lens 12 from the side of the information recording/playback surface 3. Then, a signal generated by detecting the reflected focused beam 13 is detected as address information by the address-information detecting unit 31. In Figs. 3(a), 3(b), and 4, the moving device that moves the optical pickup 10 and the objective lens 12 in the radial direction of the optical recording medium M is not shown to make the drawings easily viewable. Such a moving device may be any known moving device used for recording and playback of the optical recording medium M. In this way, the address information of the optical recording medium M may be detected by a playback system equivalent to a playback device for a standard optical recording medium.

A printing method using the printing device 100 will be described below.
In the printing device 100, the primary scanning direction is the radial direction of the optical recording medium M, and the secondary scanning direction is the circumferential direction of the optical recording medium M. The printing device 100 carries out printing by selectively applying heat to pixel areas arranged in the radial and circumferential directions of the optical recording medium M so as to generate color.

In synchronization with the start of printing, the optical recording medium M is rotated by applying electric power to the servomotor 16. Subsequently, the focused beam 13 is focused on the information recording/playback surface 3 through the optical pickup 10 and the objective lens 12. Then, a signal generated by detecting the reflected focused beam 13 is detected by the address-information detecting unit 31 as address information. The detected address information is input to the instructing means S. Simultaneously, printing data generated at an external host is input from the storing means K to the instructing means S via an I/F and a CPU. The address-information detecting unit 31 may simply use a known read-out method of the address information for an optical disk drive.

The instructing means S controls the rotation of the optical recording medium M based on the input address information. At the same time, the instructing means S sends a signal for operating the thermal head 14 to the thermal head 14 every time the instructing means S determines that a position on the optical recording medium M has reached a point at which printing should be carried out on the basis of the input address information and the printing data. In response to the signal, thermal printing is carried out at a predetermined position on the printing layer 4 (thermosensitive color layer) of the optical recording medium M.

At this point, the displaying means H for displaying an image printed on the optical recording medium M is connected to the storing means K to take in printing data, and this printing data is displayed on a monitor of the displaying means H so as to visualize the image printed on the optical recording medium M. The displaying means H is also connected to input devices, such as a keyboard, a mouse, a pointing device for moving the cursor, and pushbuttons. Printing data can be edited using these input devices. Since printing data can be edited on the monitor by the displaying means H, the ease-of-use is improved for the user. To further improve the ease-of-use, the displaying means H contains predetermined software for editing the content to be printing on the optical recording medium M. The storing means K, the displaying means H, and the input devices connected to these means may be integrated with the printing device 100.

Printing data may be recorded on the optical recording medium M by recording means (the recording means includes the recording/reading means 32, the optical pickup 10, and the objective lens 12) before, after, or during printing. More specifically, printing data is recorded on the optical recording medium M via the storing means K, the recording/reading means 32, the optical pickup 10, and the objective lens 12. In this way, previous printing data (in particular, information about the content to be printed and the printing locations on the printing layer 4 (thermosensitive color layer)) can be read out by the storing means K via the recording/reading means 32 and processed when additional printing is carried out on the optical recording medium M. As a result, character and image data corresponding to the information to be additionally printed can be printed at a printing position adjoining the printing positions of the character and image data corresponding to the information recorded previously. In particular, additional printing can be easily carried out if the printing data to be recorded on the optical recording medium M is data associated with the content to be printed and the printing positions.

In this embodiment, when recording of the printing data and printing are carried out simultaneously, printing data is recorded while the address information is being detected. Such a method is advantageous in that the time required for printing and recording can be reduced. Furthermore, by simultaneously carrying out printing and recording of printing data, disks do not have to be inserted to and removed from the printing device for printing and recording. As a result, printing and recording of printing data can be reliably carried out on the same optical recording medium. The printing data may be recorded on the optical recording medium M before or after printing.

The printing data is not limited. However, usually, the printing data is associated with the content to be printed and data associated with the printing positions. The data associated with the content to be printed includes typically characters and image data associated with information to be recorded on the optical recording medium M. For example, when music data is recorded on the optical recording medium M, the data associated with the content to be printed is information about the song title, the playing time, the name of the musician, and so on. For example, when video data is recorded on the optical recording medium M, the data associated with the content to be printed is information about, for example, the movie title, the playing time, the name of the director, and the names of the leading actor. Data associated with the printing positions is, for example, information about the printing locations on the printing layer 4 (thermosensitive color layer).

According to the above-described steps, an optical recording medium on which printing and recording of printing data have been carried out can be produced.

In this embodiment, the recording means (including the optical pickup 10, the objective lens 12, and the recording/reading means 32) further has a readout function for reading out printing data recorded on the optical recording medium M. Such a function facilitates additional printing, as described below.

Preferably, additional printing is carried out according to the following method. This method includes the steps of reading out printing data recorded on the optical recording medium M, confirming the characters and/or images printed on the optical recording medium M, confirming the printing position in the printing layer, and then carrying out additional printing. More specifically, printing data is read out by a reflected beam from the optical recording medium M irradiated with the focused beam 13 through the objective lens 12. Then, the readout printing data is displayed on the displaying means H via the storage means K. In this way, the current printing status can be checked on a screen of the display means H. Then, using software for editing the content to be printed included in the displaying means H, the content to be additionally printed can be edited on the screen. Subsequently, printing data corresponding to the content to be additionally printed is output to the storage means K and then output to the instructing means S via the storage means K. In this way, additional printing using this printing data is carried out according to the same method as described above. Additional printing can be carried out satisfactorily by further recording the printing data for additional printing on the optical recording medium M.

Instead of editing using the displaying means H, additional printing data can be read out from an external storage device, such as a hard disk (not shown in Figs. 3(a) and 4). Then, this additional printing data may be stored in the storage means K to carry out additional printing. The content of the additional printing may be displayed on the displaying means H so that the user can confirm the section on which additional printing is to be carried out.

Next, examples of the instructing means S will be described below.
Examples of the instructing means S are as follows. For example, the instructing means S may detect position information of the optical recording medium M based on the detected address information, carry out position control (rotation control) of the optical recording medium M using the position information, and carry out printing on the printing layer in synchronization with the position information. The structure of the instructing means S of this example (hereinafter, may be referred to as "first example") will be described with reference to Fig. 5(a).

Fig. 5(a) is a functional block diagram illustrating the structure of the instructing means S according to the first example. As shown in Fig. 5(a), the instructing means S includes position-information detecting means I for converting address information detected by the address-information detecting unit 31 (detecting means) into position information and controlling means C for controlling the servomotor 16 (rotating means) and the thermal head 14 (printing means) on the basis of the position information.

The position-information detecting means I detects the angle of the optical recording medium M on the basis of the address information of the optical recording medium M. Then, the detected angle of the optical recording medium M is output to the controlling means C. The controlling means C starts electric power supply to the thermal head 14 on the basis of the printing data input from the storage means K in synchronization with the detected angle. Energizing the thermal head 14 causes thermal energy at a level sufficient for thermal coloring to transfer to the printing layer 4 (thermosensitive layer) of the optical recording medium M. In this way, color is generated at the printing layer 4 (thermosensitive layer), and data of characters and image generated at an external host is printed on the optical recording medium M. While the electric power is supplied to the thermal head 14, the angular velocity of the rotation of the servomotor 16 during printing is controlled using the detected angle so that displacement of the printing is minimized.

The instructing means S according to another example may simultaneously carry out position control (rotation control) of the optical recording medium M using detected address information and carry out printing on the printing layer in synchronization of the detected address information. The structure of this example of the instructing means S (hereinafter, may be referred to as "second example") will be described with reference to Fig. 5 (b).

Fig. 5(b) is a schematic view illustrating the structure of the instructing means S according to the second example. As shown in Fig. 5(b), the instructing means S includes drive control means (hereinafter may be referred to as "rotation control means") RC for controlling the servomotor 16 (rotating means) using the address information detected by the address-information detecting unit 31 (detecting means) and print control means PRC for controlling the thermal head 14 (printing means) using the address information detected by the address-information detecting unit 31 (detecting means).

The rotation control means RC carries out rotation control of the servomotor 16 (rotating means) on the basis of the address information of the optical recording medium M. Usually, the rotation of the servomotor 16 is controlled so as to approach a constant angular velocity. In the description above, rotation control of the servomotor 16 is directly carried out using address information. Alternatively, the address information may be converted into position information (angle information) of the optical recording medium M, and then rotation control of the servomotor 16 may be carried out using this position information.

The print control means PRC starts supplying electric power to the thermal head 14 on the basis of printing data input from the storage means K in synchronization with the input address information of the optical recording medium M so as to carry out printing at a predetermined position on the printing layer of the optical recording medium M. Energizing the thermal head 14 causes thermal energy at a level sufficient for thermal coloring to transfer to the printing layer 4 (thermosensitive layer) of the optical recording medium M. In this way, color is generated in the printing layer 4 (thermosensitive layer), and data of characters and image generated at an external host is printed on the optical recording medium M. Alternatively, the address information may be converted into position information (angle information) of the optical recording medium M, and then electric power may be supplied to the thermal head 14 using this position information.

As described above, in the instructing means S according to the second example (see Fig. 5(b)), the rotating means and the printing means are controlled in parallel.

Common points of the instructing means S according to the first and second examples (see Figs. 5(a) and 5(b)) are described below. In both examples, instead of the angles of the servomotor 16 (rotating means) and the turntable 19, information on the angle of the optical recording medium M can be obtained on the basis of address information recorded on the optical recording medium M. In this way, even when the angle between the turntable 19 and the optical recording medium M changes after the optical recording medium M is unloaded and then reloaded on the turntable 19, printing can be continued on the basis of the address information recorded on the optical recording medium M, without circumferential displacement of the printing position. In other words, additional printing can be carried out so that the printed image matches a previously printed image.

Another common point of the instructing means S according to the first and second examples is that address information recorded on the optical recording medium M is played back at the optical pickup 10 and the address-information detecting unit 31, and the detected signal is used as a feedback signal for the servomotor 16 (rotating means). This leads to precise control of the rotation angle and the rotation speed of the optical recording medium M, like the data recorded on the optical recording medium M.

Differences between the instructing means S according to the first and second examples (see Figs. 5(a) and 5(b)) are described below.

According to the first example (see Fig. 5(a)), the rotation control of the servomotor 16 (rotating means) and the electric power supply to the thermal head 14 (printing by the printing means) are simultaneously controlled by the controlling means C. In other words, printing is carried out while the printing position can be monitored using the angle information of the optical recording medium M and while the angular velocity of the rotation of the servomotor 16 (rotating means) can be controlled to reduce the displacement in the printing. As a result, in the first example (see Fig. 5(a)), the quality of the printed image can be enhanced. Furthermore, displacement between an image printed by additional printing and a previously printed image can be suppressed. However, the first example tends to require complicated control since rotation control is carried out based on feedback on the printing status.

In contrast, in the second example (see Fig. 5(b)), rotation control of the servomotor 16 (rotating means) is carried out by the rotation control means RC. Electric power supply to the thermal head 14 (printing by the printing means) is carried out by the print control means PRC. In other words, although address information is used, rotation and printing are controlled independently. As a result, rotation control cannot be carried out based on feedback on the printing status, but the control becomes simple. The instructing means S according to this example may be used, for example, when character information is mainly printed on the printing layer 4. This example is advantageous in that the cost of the control circuit can be reduced while high printing accuracy is maintained.

As described above, the first or second example may be selected depending on the usage of the printing device 100 (for example, depending on whether image information or character information is to be mainly printed) and cost.

### (Carrying out printing using address information)

Next, an embodiment of a printing device used when printing is carried out on an optical recording medium using address information will be described with reference to Figs. 3(b) and 5(c). Use of such a printing device leads to a cost reduction of the printing device while the printing quality is maintained.

In Fig. 3(b), the elements that are the same as those in Fig. 3(a) are represented by the same reference numerals. Figs. 3(a) and 3(b) are different in that, the spindle motor 16 (rotating means) in Fig. 3(a) is controlled by the instructing means S on the basis of the address information detected at the optical recording medium M, whereas the spindle motor 16 (rotating means) in Fig. 3(b) is driven by rotation-reference-signal generating means X without rotation control using address information. This difference will be mainly described below.

As shown in Fig. 3(b), the spindle motor 16 (rotating means) is driven based on a reference signal from an internal unit of the printing device. More specifically, a rotation reference signal is generated at the rotation-reference-signal generating means X, and the spindle motor 16 (rotating means) is rotated in response to this rotation-reference-signal. The address information is input to the instructing means S. Every time the instructing means S determines that the optical recording medium M reaches the printing position on the basis of the detected position information, a signal for operating the thermal head 14 is sent to the thermal head 14. By this signal, thermal printing is carried out at a predetermined position on the printing layer 4 (thermosensitive layer) of the optical recording medium M.

In this example, since rotation control is not carried out by the instructing means S, the accuracy of the rotation is lower than that of Fig. 3(a). However, displacement of the image to be printed can be corrected since printing control is carried out by an address signal.

Next, an example of the instructing means S will be described.
The example of the instructing means S is as follows. For example, the instructing means S may detect position information of the optical recording medium M according to detected address information and carry out printing on the printing layer in synchronization with the position information. The structure of this example of the instructing means S (hereinafter, may be referred to as "third example") will be described with reference to Fig. 5(c) .

Fig. 5(c) is a functional block diagram illustrating the structure of the instructing means S according to the third example. As shown in Fig. 5(c), the instructing means S includes position-information detecting means I for converting address information detected by the address-information detecting unit 31 (detecting means) into position information and print control means PRC for controlling the thermal head 14 (printing means) on the basis of the position information. The position-information detecting means I may be the same as that in Fig. 5(a). Furthermore, position-information detecting means I may be omitted. Similarly, the print control means PRC may be same as that in Fig. 5(b).

The position-information detecting means I detects the angle of the optical recording medium M on the basis of the address information of the optical recording medium M. Then, the detected angle of the optical recording medium M is output to the print control means PRC. The print control means PRC starts electric power supply to the thermal head 14 on the basis of the printing data input from the storage means K in synchronization with the detected angle. Energizing the thermal head 14 causes thermal energy at a level sufficient for thermal coloring to transfer to the printing layer 4 (thermosensitive layer) of the optical recording medium M. In this way, color is generated at the printing layer 4 (thermosensitive layer), and data of characters and images generated at an external host is printing on the optical recording medium M.

This example is advantageous in that the cost of the control circuit can be reduced while high printing accuracy is maintained.

### (Others)

In the above-described first embodiment, the optical recording medium M is rotated by the servomotor 16 and the backup roller 15 is used as a driven roller. However, the backup roller may be used as a driving roller. In other words, instead of the above-described servomotor 16, the backup roller, which is driven by a motor, may control the rotation.

### (Additional printing of an image by another printing device)

Printing devices 100 different from the printing device 100 previously used for printing may be used for carrying out additional printing on an optical recording medium M on which printing has already been carried out. In such cases, the positional relationship of the thermal head 14 and the optical pickup 10, as shown in Fig. 4, may differ slightly for each printing device 100. In other words, printing devices 100 that are actually mass-produced each has installation error of the thermal head 14 and the optical pickup 10. Moreover, the positional relationship of the thermal head 14 and the optical pickup 10 may differ if the manufacturer of the printing device 100 differs or if the printing device 100 is a different model. Thus, when additional printing is carried out with a printing device 100 different from that used for the previous printing, the installation error and the difference in the manufacturer and model may cause a gap to form between the additional printed image (hereinafter, "printed image" refers to characters and images printed on the printing layer of the optical recording medium M), and the previously printed image and the additional printed image may overlap. Accordingly, it is preferable to carry out the following countermeasures by taking into consideration the installation error and the difference in the manufacturer and model of each printing device 100.

It is preferable to measure the positional relationship of the thermal head 14 and the optical pickup 10 before shipment of the printing device 100 and store this in storing means (relative-position storing means (not shown in Figs. 3(a) and 3(b))), such as a memory, or the instructing means S of the printing device 100.
More specifically, before shipment, the distance T from the spindle center Z of the thermal head 14 and the angle θ between the straight line from the objective lens of the optical pickup 10 to the spindle center Z and the straight line from thermal head 14 to the spindle center Z are measured, as shown in Fig. 4. Then, this measurement data is recorded in the memory or the instructing means S of the printing device 100.
In this way, the printing device 100 can accurately detect the relative positional relationship between the thermal head 14 and the optical pickup 10 by reading out the measurement data to carry out additional printing.

This point will be described in detail below with reference to Fig. 3(a).
The optical recording medium M having a printed image on the printing layer 4 is loaded to the printing device 100. Before carrying out additional printing, printing data for an image recorded on the optical recording medium M (in particular, data about the printing content and data about the printing position) is read out by the recording/reading means 32 via the optical pickup 10. Then, this printing data is stored in the storage means K, and the printed image is displayed on the displaying means H, if required. In this way, the printing device 100 detects the first position on the printing layer 4 where additional printing should be carried out. However, unless the relative position of the thermal head 14 and the optical pickup 10 is input to the instructing means S, displacement in printing may occur. Accordingly, by storing the measurement data (i.e., relative positional relationship) obtained before shipment in the memory or the instructing means S of the printing device 100, the instructing means S uses the measurement data during additional printing to facilitate accurate additional printing at the first position on the printing layer where additional printing should be carried out.

This method is advantageous in that the cost is suppressed and satisfactory addition printing is carried out since the printing device 100 does not substantially require additional mechanisms. The function of the memory may be added to the storage means K.

### (Embodiment of additional printing using a line image sensor)

Use of a line image sensor is preferred as another method to suppress displacement in additional printing.
A line image sensor is typically an image sensor including a plurality of combinations of photodiodes and CCDs disposed on a plane. Electric charges photoelectrically converted by the photodiodes during one exposure are simultaneously sent to CCD elements corresponding to pixels. Then, an image is photoelectrically converted by applying transfer pulses to the CCDs and reading out the electric charges in sequence. In this way, the image can be recognized as electronic data.
Such images that can be recognized as electronic data include characters and/or images, including printed images and a pixel N, such as that described below.

It is advantageous to introduce a line image sensor since accurate control and measurement of the positional relationship between the thermal head 14 and the optical pickup 10 are not necessary before shipment. Furthermore, since the printing position can be adjusted for each printing process, a high-quality image can be easily maintained even when additional printing is carried out. Even if the positional relationship of the thermal head 14 and the optical pickup 10 is measured before shipment, the positional relationship of the thermal head 14 and the optical pickup 10 measured before shipment may change due to aging and vibration applied to the printing device 100 during delivery. Even in such cases, satisfactory additional printing can be carried out using a line image sensor. An embodiment of a printing device 100 using a line image sensor will be described below.

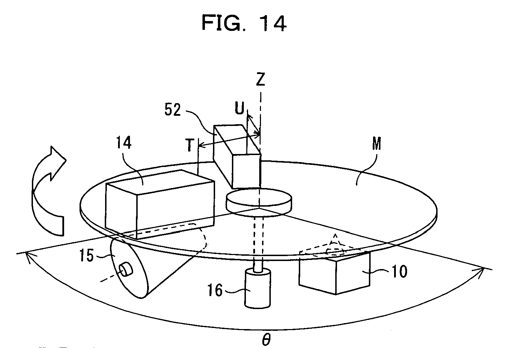

Fig. 14 is a schematic perspective view of part of a printing device including a line image sensor 52. In Fig. 14, the elements that are the same as those in the other drawings are represented by the same reference numerals. As shown in the drawing, the line image sensor 52 is disposed at a predetermined position on the radius of the printing layer 4 of the optical recording medium M. The following can be achieved by employing the line image sensor 52.

First, test printing (trial printing) is carried out on the printing layer using both the line image sensor 52 and the thermal head 14. In this way, the relative positional relationship of the thermal head 14 and the line image sensor 52 can be easily detected by the printing device 100.

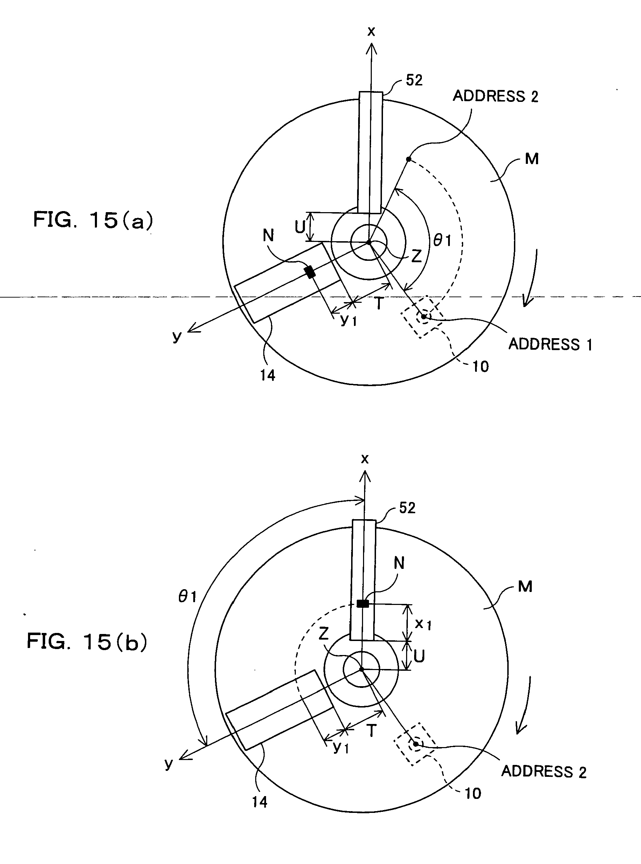

Next, this point will be described with reference to Figs. 15(a) and 15(b). Figs. 15(a) and 15(b) are plan views of the top of part of the printing device illustrated in Fig. 14. More specifically, Fig. 15(a) illustrates a test printing pixel N printed by the thermal head 14. Fig. 15(b) illustrates the line image sensor 52 recognizing the printed pixel N after the optical recording medium M has moved by an angle θ1 in the clockwise direction. In Figs. 15(a) and 15(b), the elements that are the same as those in the other drawings are represented by the same reference numerals. The detection of the relative positions of the thermal head 14 and the line image sensor 52 by carrying out test printing on the printing layer will be described below with reference to Figs. 15(a) and 15(b).

As shown in Fig. 15(a), the pixel N is printed at a coordinate y1 by the thermal head 14. At this time, an address 1 is detected by the optical pickup 10.
Next, as shown in Fig. 15(b), the printed pixel N is rotated by θ1 in the clockwise direction from the position shown in Fig. 15(a), and then the printed pixel N is detected by the line image sensor 52. At this time, if the coordinate of the pixel N detected by the line image sensor 52 is x1 and the address detected by the optical pickup 10 is address 2, then, the coordinate y1 of the thermal head 14 corresponds to the coordinate x1 of the line image sensor 52. In this way, the relative positional relationship of the line image sensor 52 and the thermal head 14 in the radial direction is detected by the printing device 100.
The rotational angle θ1 of the optical recording medium M can be determined on the basis of the addresses 1 and 2. As a result, the angle (θ1) between the straight line from the line image sensor 52 to the spindle center Z and the straight line from the thermal head 14 to the spindle center Z can be detected by the printing device 100.

Accordingly, the relative positional relationship between the thermal head 14 and the line image sensor 52 can be detected by the printing device 100. Therefore, by carrying out adjustment by test printing a pixel N before additional printing, the position to which additional printing should be carried out can be accurately detected. Even when the relative positional relationship between the thermal head 14 and the line image sensor 52 changes due to environmental changes of the printing device 100 (for example, changes in temperature and humidity and vibration during delivery), such change in the relative positional relationship can be appropriately corrected by periodically carrying out adjustment by test printing of a pixel N. In this way, satisfactory additional printing can be carried out.

If the printing device 100 is less likely to be affected by environmental changes, and if the installation positions of the thermal head 14 and the line image sensor 52 are less likely to move from the positions set before shipment, the following correction method may be employed.

In other words, the distance T from the spindle center Z to the thermal head 14 is measured before shipment and is stored in the memory (not shown in Figs. 3(a) and 3(b)) of the printing device 100 or the instructing means S. In this way, the coordinate from the spindle center Z can be represented by "T+y1". The distance U from the spindle center Z to the line image sensor 52 is also measured before shipment and stored in the memory (not shown in Figs. 3(a) and 3(b)) of the printing device 100 or the instructing means S. In this way, the coordinate from the spindle center Z can be represented by "U+x1". In this case, since T+y1=U+x1, y1=x1+U-T is derived, and the relationship between y1 and x1 can be detected more accurately.

Next, the line image sensor 52 detects a printed image on the printing layer 4 before additional printing. In this way, additional printing can be carried out at a desired position.
More specifically, while the line image sensor 52 is driven to detect the printed image and address information is detected by the optical pickup 10, the optical recording medium M is turned by one revolution (this may be a plurality of revolutions, if required). In this way, the printed image on the printing layer 4 and the printing position of the printed image (i.e., the coordinate in the radial direction of the line image sensor 52 (equivalent to the primary scanning direction) and the corresponding address information) can be detected.
The address information may be detected while the line image sensor 52 is operated, or only the address information obtained when the printed image reaches the line image sensor 52 may be detected.
When printing data is recorded on the optical recording medium M, the recorded printing data corresponding to the printed image is read out by the optical pickup 10 and is recognized by the printing device 100. Reading of the printed image and recognition of the printing data may be carried out simultaneously, or one of the two processes can be carried out first.

As described above, when the actual printed image is detected by the line image sensor 52, the position of the printed image at that point of time (i.e., the coordinate in the radial direction of the line image sensor 52 and the corresponding address information) is detected. Furthermore, by using the previously-obtained relative positional relationship between the thermal head 14 and the line image sensor 52, data about the printing position included in the printing data can be appropriately corrected in accordance with the actual printed image. As a result, the printing position at which additional printing is to be carried out can be accurately detected by the printing device 100, and satisfactory additional printing can be carried out.
When the address information is detected only at the moment when the line image sensor 52 detects the printed image, the starting position of printing can be detected by the printing device 100, and satisfactory additional printing can be carried out easily.

Preferably, the length of the line image sensor 52 in the radial direction of the optical recording medium M should be sufficiently large to completely detect the entire printing layer of the optical recording medium M. More specifically, it is preferable that the length be the same as or larger than the radius of the optical recording medium M.

When printing data is not recorded on the optical recording medium M and a predetermined image is printed on the printing layer 4, the address on the optical recording medium M can be detected while the line image sensor 52 detects the printed image. In this way, it is advantageous in that the position at which additional printing should be carried out can be easily detected, and satisfactory additional printing can be carried out.

### (Additional printing of an image using a position sensor)

According to another method of suppressing displacement of additional printing, a position sensor may be used instead of a line image sensor.
A position sensor is an image sensor including a plurality of pairs of a photodiode and a CCD disposed on a plane. Electric charges photoelectrically converted by the photodiodes during one exposure are simultaneously sent to CCD elements corresponding to pixels. Then, an image is photoelectrically converted by applying transfer pulses to the CCDs and reading out the electric charges in sequence. In this way, the image can be recognized as electronic data. Unlike a line image sensor, the position sensor is not required to read the entire length in the radial direction of the printing layer 4. The length may be set arbitrarily so long as the advantages of the present invention are not significantly compromised.
Data that can be recognized as electronic data includes printed images, and characters and images, including the pixel N and the mark 54, described below.

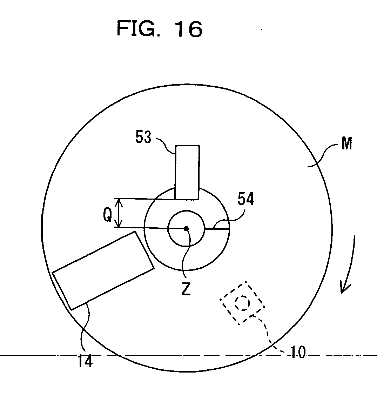

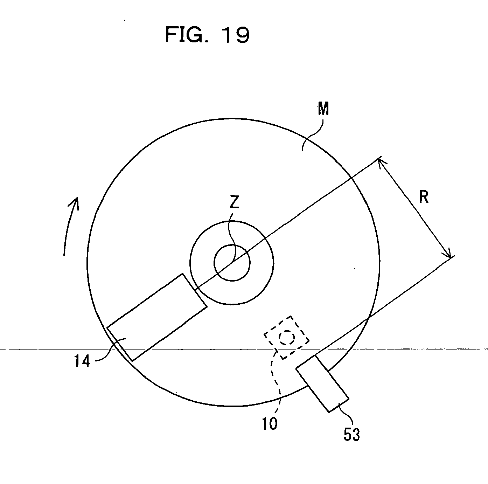

Two examples in which a position sensor is used will be described below. Figs. 16 to 18(b) are schematic plan view illustrating part of the printing device including a position sensor 53 according to a first example. Figs. 19 to 20(c) are schematic plan view illustrating part of the printing device including a position sensor 53 according to a second example. In Figs. 16 to 20(c), the elements that are the same as those in the other drawings are represented by the same reference numerals.

### (First example using the position sensor)

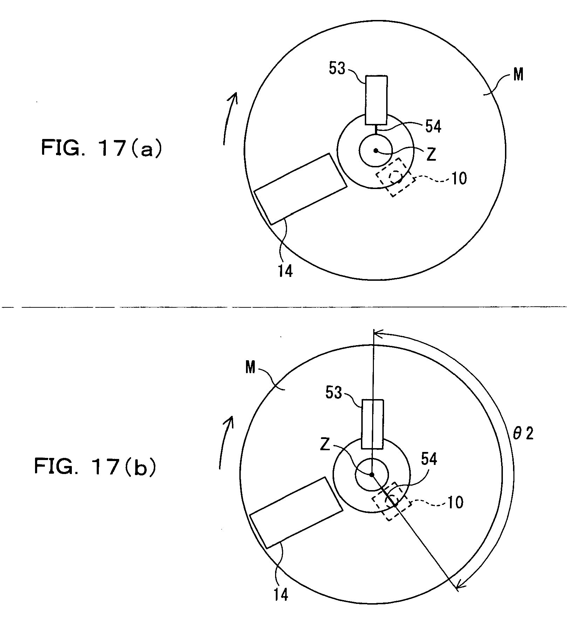

In this example, a mark 54 that is a line segment extending in the radial direction in the transparent region of the optical recording medium M near the center hole (for example, a region on the polycarbonate substrate where neither a recording layer nor reflective layer is provided). In this example, the mark 54 is a black line segment. Instead, however, the mark 54 may be a plurality of black line segments extending in the radial direction. As shown in Fig. 17(a), the length of the line segment is not limited so long as part of the mark 54 passes below the position sensor 53 so that the position sensor 53 can detect the outer end of the mark 54. However, it is preferable that the line segment be the same length as the transparent region (i.e., the radial length of the region on the optical recording medium M). When a plurality of line segments is provided, it is preferable that all of the line segments have the same length. Preferably, the distance between the outer ends of the plurality of line segments (the ends farther away from the spindle center Z) and the spindle center Z should be the same. Also the outer ends of the plurality of line segments preferably should be aligned on the boundary between the transparent region and the recording layer.

The position sensor 53 is installed at a predetermined position along the radius of the printing layer 4 of the optical recording medium M. More specifically, as shown in Fig. 16, the position sensor 53 is disposed such that a part is disposed over the transparent region of the optical recording medium M and another part is disposed over the printing layer 4. The positional relationship between the optical recording medium M and the position sensor 53 can be detected using the mark 54 provided on the transparent region of the optical recording medium M and the position sensor 53. Furthermore, the relative positional relationship between the optical pickup 10 and the thermal head 14 can be determined on the basis of the position of the position sensor 53.

Such a detecting process includes the following four steps: (1) detecting the positional relationship between the optical recording medium M and the position sensor 53 in the radial direction; (2) detecting the angle between a straight line from the position sensor 53 to the spindle center Z and a straight line from the optical pickup 10 to the spindle center Z; (3) detecting the relative positional relationship between the position sensor 53 and the thermal head 14 in the radial direction; and (4) detecting the angle between a straight line from the position sensor 53 to the spindle center Z and a straight line from the thermal head 14 to the spindle center Z. These steps may be carried out in any order or simultaneously so long as the advantages of the present invention are not significantly compromised. As an example, the steps will be described below in the above-described order with reference to Figs. 16 to 18(b).

First, the step of detecting the positional relationship between the optical recording medium M and the position sensor 53 in the radial direction will be described. Figs. 16, 17(a), and 17(b) are schematic plan views of part of the printing device 100 including the position sensor 53.
Before shipment, the optical recording medium M is rotated to move the mark 54 below the position sensor 53, as shown in Fig. 17(a), and the mark 54 is detected by the position sensor 53. At this time, the length of the detected part of the mark 54 is stored in the memory (not shown in Figs. 3(a) and 3(b)) of the printing device 100 or the instructing means S. Furthermore, the distance Q from the spindle center Z to the position sensor 53, as shown in Fig. 16, is measured before shipment and is also stored in the memory (not shown in Figs. 3(a) and 3(b)) of the printing device 100 or the instructing means S.
Then, the positional relationship between the optical recording medium M and the position sensor 53 in the radial direction is detected before additional printing is carried out. More specifically, the mark 54 is detected by the position sensor 53 according to the same method described above. By comparing the length of the detected part of the mark 54 with the value measured before shipment, the position sensor 53 determines the amount of displacement in the radial direction compared to the value measured before shipment and transmits the amount to the printing device 100. By adding the value of the detected displacement (a positive or negative value) to the value Q, the current distance from the position sensor 53 to the spindle center Z (although not shown in the drawings, this distance will be represented by reference character Q') is determined and transmitted to the printing device 100. In other words, the position in the radial direction is corrected using the outer end of the mark 54 as a reference.

Next, the step of detecting the angle between a straight line from the position sensor 53 to the spindle center Z and a straight line from the optical pickup 10 to the spindle center Z will be described with reference to Figs. 17(a) and 17(b).
Fig. 17(a) illustrates the mark 54 moved below the position sensor 53 by rotating the optical recording medium M at a constant speed. As shown in Fig. 17(b), the optical recording medium M is further rotated so that the optical pickup 10 moves to a radial position where the mark 54 detectable. Then, the laser beam emitted from the optical pickup 10 is focused at the surface on which the mark 54 is provided, and the focus point is positioned to the mark 54. In this embodiment, since the mark 54 is black, the intensity of the reflected beam detected by the optical pickup 10 is minimized when the focal point of the laser beam lies on the mark 54. By reading the mark 54 with the optical pickup 10 while the laser beam is focused on the mark 54 on the rotating optical recording medium M, the intensity of the returned (reflected) beam varies from high to low and then low to high as the mark 54 passes through the focal point of the laser beam. Through this procedure, the optical pickup 10 can detect the mark 54.

The time interval from the state in Fig. 17(a) to the state in Fig. 17(b) is measured by this operation. Furthermore, the time required for one revolution of the optical recording medium M can be calculated from the rotational velocity of the optical recording medium M. Consequently, the angle (θ2) between the straight line from the position sensor 53 to the spindle center Z and the straight line from the optical pickup 10 to the spindle center Z can be calculated from the time required for the mark 54 to move from the position sensor 53 to the optical pickup 10 determined by the above-described operation and the time required for one revaluation. As a result, θ2 can be determined by the printing device 100.

In this embodiment, the mark 54 is a black line segment. However, the mark 54 may have any shape detectable by the position sensor 53 and the optical pickup 10. For example, the mark 54 may be a groove, a protrusion, a printed mark, a satin finished grain pattern. The mark 54 may also be formed by removing part of the reflective layer or the recording layer or by carrying out recording on the recording layer. The color of the mark 54 is not limited to black, if the mark has a color. Preferably, the mark 54 should have a color that absorbs the laser beam used.

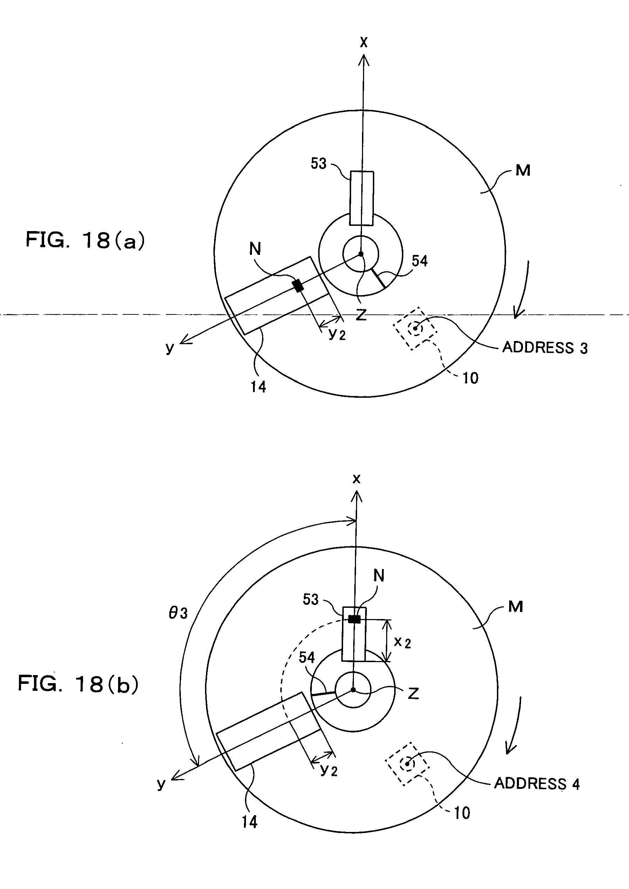

Next, the step of detecting the relative positional relationship between the position sensor 53 and the thermal head 14 in the radial direction and the step of determining the angle between the straight line from the position sensor 53 to the spindle center Z and the straight line from the thermal head 14 to the spindle center Z will be described with reference to Figs. 18(a) and 18(b).
Figs. 18(a) and 18(b) are schematic plan views of part of the printing device including the position sensor 53 and illustrate the process of detecting the relative positional relationship (radial direction and angle) between the position sensor 53 and the thermal head 14. The process of detecting the relative positional relationship (radial direction and angle) between the optical pickup 10 and the thermal head 14 will be described below with reference to Figs. 18(a) and 18(b).

As shown in Fig. 18(a), the pixel N is printed at coordinate y2 of the thermal head. The pixel N is printed at a radial position within the detection range of the position sensor 53, while an address 3 is detected by the optical pickup 10.

As shown in Fig. 18(b), the optical recording medium M is clockwise rotated by θ3 from the position shown in Fig. 18(a) so that the position sensor 53 detects the printed pixel N. At this time, the coordinate of the pixel N detected by the position sensor 53 is x2, and the optical pickup 10 detects an address 4.
Therefore, the coordinate y2 of the thermal head 14 corresponds to the coordinate x2 of the position sensor 53. In this way, the printing device 100 can detect the relative positional relationship between the position sensor 53 and the thermal head 14 in the radial direction.

As described above, the distance Q' from the spindle center Z to the position sensor 53 is calculated in advance. Therefore, using y2 and x2 obtained by the above-described process, the distance between the thermal head 14 and the spindle center Z can be calculated with reference to the position sensor 53.
In other words, the position of the thermal head 14 relative to the optical recording medium M can be detected by the printing device 100, and printing can be controlled so that printing data is printed at an assigned position in the radial direction.

The rotational angle θ3 of the optical recording medium M can be determined by the addresses 3 and 4. As a result, the angle (θ3) between the straight line from the position sensor 53 to the spindle center Z and the straight line from the thermal head 14 to the spindle center Z can be detected by the printing device 100.
The printing device 100 can determine the relative positional relationship between the optical pickup 10 and the thermal head 14 with the position sensor 53 from θ2 and θ3 obtained by the above-described process.
Accordingly, printing can be carried out at a predetermined position assigned by the printing data through controlling the printing position in the radial direction with reference to the address information detected by the optical pickup 10.

When printing data is recorded on the optical recording medium M, the printing device 100 can detect the initial position for additional printing by outputting the information from the optical pickup 10 to the printing device 100.
The relative positional relationship between the optical pickup 10 and the thermal head 14 in the circumferential direction and the distance between the thermal head 14 and the spindle center Z can be determined more accurately from the information about Q', y2, x2, θ2, and θ3.
As a result, the position thermal head 14 that actually corresponds to the initial position of additional printing can be determined more accurately, resulting in highly accurate additional printing at a region in which additional printing is to be carried out.

Even when the relative positional relationship between the thermal head 14, the position sensor 53, and the optical pickup 10 varies due to environmental changes of the printing device 100 (for example, changes in temperature and humidity and vibration during delivery), such change in the relative positional relationship can be appropriately corrected by periodical adjustment through test above-described operation. In this way, additional printing can be successfully carried out.

### (Second example using the position sensor)

In this example, the position sensor 53 is disposed at an angular position (equivalent to the secondary scanning direction) that is the same as that of the optical pickup 10. More specifically, as shown in Fig. 19, part of the position sensor 53 is disposed outside the outer diameter of the optical recording medium M, and the other part of the position sensor 53 is disposed above the printing layer. Matching of the angular position of the position sensor 53 and the angular position of the optical pickup 10 can determine the positional relationship between the optical pickup 10 and the thermal head 14 from the positional relationship between the optical recording medium M and the position sensor 53 and the position of the position sensor 53.

Such a detecting process includes the steps of: (1) detecting the positional relationship between the optical recording medium M and the position sensor 53 using the optical pickup 10; (2) detecting the relative positional relationship of the position sensor 53 and the thermal head 14 in the radial direction; and (3) detecting the angle between the straight line from the position sensor 53 to the spindle center Z and the straight line from the thermal head 14 to the spindle center Z. These steps may be carried out in any order or simultaneously so long as the advantages of the present invention are not significantly compromised. As an example, the steps in the above-described order will be described below with reference to Figs. 19 to 20(c).

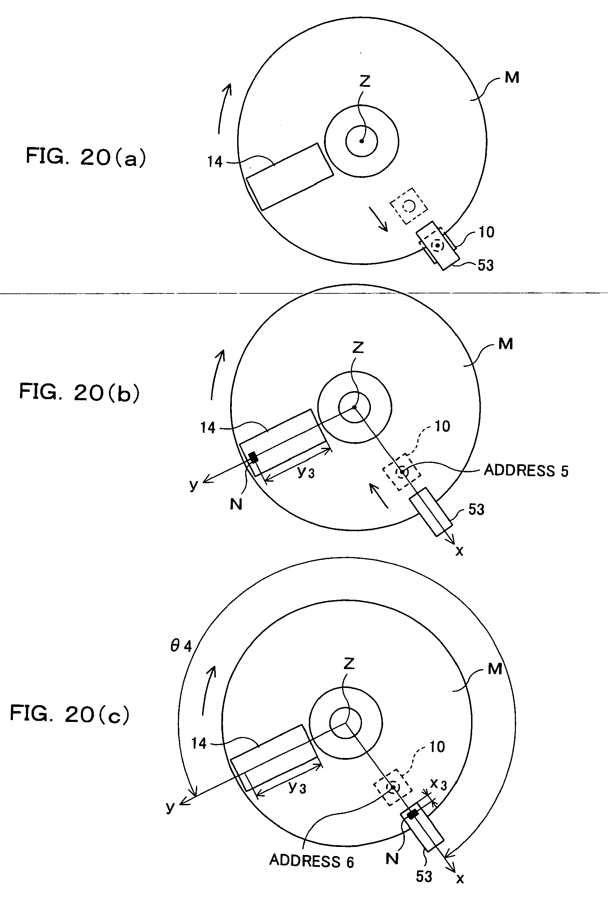

First, the step of detecting the positional relationship between the optical recording medium M and the position sensor 53 by the optical pickup 10 will be described. Figs. 19 to 20(c) are schematic plan views of part of the printing device including the position sensor 53. Before shipment, the optical pickup 10 is moved to detect a predetermined address (this address is referred to as "address W") on the optical recording medium M, as shown in Fig. 20(a). Then, the optical pickup 10 moves outward from the detected position by a predetermined distance (within a range in which a laser beam can be directly incident on the position sensor 53), and then the position sensor 53 is irradiated with a laser beam from the optical pickup 10. At this time, the position of the focal point of the emitted laser beam on the position sensor 53 is stored in the memory of the printing device 100 (not shown in Figs. 3(a) and 3(b)) or the instructing means S. As shown in Fig. 19, the distance R from the spindle center Z to the position sensor 53 measured before shipment is stored in the memory of the printing device 100 (not shown in Figs. 3(a) and 3(b)) or the instructing means S.

Then, during additional printing, the positional relationship between the optical recording medium M and the position sensor 53 is detected by the optical pickup 10. More specifically, the optical pickup 10 detects the address W, moves outward from the detected position by a predetermined distance equal to that measured before shipment, and emits a laser beam to the position sensor 53.
By comparing the position of the laser beam incident on the position sensor 53 with the position on the position sensor 53 measured before shipment, the printing device 100 can determine the displacement of the position sensor in the radial and circumferential directions from the original position of the position sensor before shipment. Furthermore, addition of the value (positive or negative value) of the calculated displacement to the value R leads to detection of the current distance between the position sensor 53 and the spindle center Z (although not shown in the drawings, this distance will be represented by reference character R') and transmission of the distance to the printing device 100.

Next, the steps of detecting the relative positional relationship of the position sensor 53 and the thermal head 14 in the radial direction and detecting the angle between the straight line from the position sensor 53 to the spindle center Z and the straight line from the thermal head 14 to the spindle center Z will be described with reference to Figs. 20(a) to 20(c).
As shown in Fig. 20(b), a pixel N is printed at a coordinate position y3 of the thermal head 14. The pixel N is printed at a radial position within a range detectable by the position sensor 53. At this time, the optical pickup 10 detects an address 5. Then, as shown in Fig. 20(c), the optical recording medium M is clockwise rotated by θ4 from the position shown in Fig. 20(b), and the position sensor 53 detects the printed pixel N. At this time, the coordinate of the pixel N detected by the position sensor 53 is x3, and the address detected by the optical pickup 10 is an address 6.
Accordingly, the coordinate y3 of the thermal head 14 corresponds to the coordinate x3 of the position sensor 53. In this way, the printing device 100 can detect the relative positional relationship between the position sensor 53 and the thermal head 14 in the radial direction.

The distance R' from the spindle center Z to the position sensor 53 is calculated. Therefore, using y3 and x3 obtained by the above-described process, the distance between the thermal head 14 and the spindle center Z can be calculated.
In other words, the position of the thermal head 14 with respect to the optical recording medium M can be detected by the printing device 100, and printing can be controlled so that printing data is printed at an assigned desired position in the radial direction.

The rotational angle θ4 of the optical recording medium M can be determined by the addresses 5 and 6. As a result, the angle (θ4) between the straight line from the position sensor 53 to the spindle center Z and the straight line from the thermal head 14 to the spindle center Z can be transmitted to the printing device 100.
The displacement in the circumferential direction of the position sensor 53 from the position before shipment is calculated. By taking into consideration this displacement when the address 6 is detected, θ4 can be detected more accurately by the printing device 100.

The relative positional relationship between the optical pickup 10 and the thermal head 14 and the distance between the thermal head 14 and the spindle center Z can be detected by the printing device 100 with reference to the position sensor 53, by using the information on R', y3, x3, and θ4 obtained by carrying out the above-described operation.
Accordingly, printing can be carried out at a predetermined position assigned by the printing data through controlling the printing position in the radial direction with reference to the address information detected by the optical pickup 10.

When printing data is recorded on the optical recording medium M, the printing device 100 can detect the initial position for additional printing by outputting the information from the optical pickup 10 to the printing device 100.
The relative positional relationship between the optical pickup 10 and the thermal head 14 in the circumferential direction and the distance between the thermal head 14 and the spindle center Z can be determined more accurately from the information about R', y3, x3, and θ4.
As a result, the position of the thermal head 14 that actually corresponds to the initial position of additional printing can be determined more accurately, resulting in highly accurate additional printing at a region in which additional printing is to be carried out.

Even when the relative positional relationship between the thermal head 14, the position sensor 53, and the optical pickup 10 varies due to environmental changes of the printing device 100 (for example, changes in temperature and humidity and vibration during delivery), such change in the relative positional relationship can be appropriately corrected by periodical adjustment. In this way, additional printing can be successfully carried out.

A case using the line image sensor 52 described with reference to Figs. 15(a) and 15(b) is compared with a case using the position sensor 53 described with reference to Figs. 16 to 20(c).
When the line image sensor 52 is used, the pixel N for test printing may be provided anywhere along the radius since the line image sensor 52 can detect the entire radius of the optical recording medium M. In contrast, when the position sensor 53 is used, the pixel N for test printing is printed within a range detectable by the position sensor 53. Since the line image sensor 52 can detect the entire surface of the image printed on the optical recording medium M, additional printing can be successfully achieved even when printing data is not recorded on the optical recording medium M. Since a line image sensor 52 is generally more expensive than a position sensor 53, use of a position sensor 53 can reduce the cost of the printing device 100. When the position sensor 53 is used, adjustment of the positional relationship of the attachment position of the optical pickup 10 and the attachment position of the position sensor 53 (second example) can simplify the process of detecting the relative positional relationships between the elements.

### (1-2) Second Embodiment

In the first embodiment, a cone-shaped backup roller 15 is used. Alternatively, a plurality of independent rollers 33a rotating independently may be used. Such an embodiment will be described below.

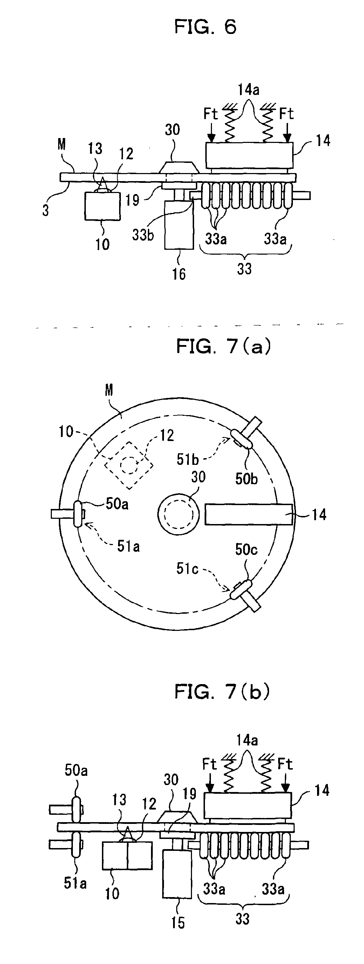

Fig. 6 is a schematic cross-sectional view illustrating the main elements of a printing device according to the second embodiment. Fig. 6 illustrates a part (part 101 of the printing device) surrounded by dotted lines in Figs. 3(a) and 3(b). Although not shown in Fig. 6, the parts other than the part 101 of the printing device may have that same structure as those shown in Figs. 3(a) and 3(b). In Fig. 6, the elements that are the same as those in Figs. 3(a) and 3(b) are represented by the same reference numerals.

The parts that differ from those of the first embodiment will mainly be described below.
The optical recording medium M is placed on the turntable 19 and is held from above by the clamp 30 attached to a device cover. An engagement protrusion having an outer diameter that is substantially the same as the diameter of the center hole of the optical recording medium M is provided at the center of the turntable 19 so as to enable centering of the optical recording medium M.

The thermal head 14 is disposed along the radial direction of the optical recording medium M and is pushed towards the optical recording medium M by the spring 14a attached to the device cover with a pushing force Ft.

A backup roller 33 is disposed along the radial direction of the optical recording medium M against the pushing force Ft and includes the rollers 33a that rotate independently. Since each of the rollers 33a rotates independently in response to the linear velocity that changes depending of the contact radius of the optical recording medium M, slipping due to the difference between the inner and outer linear velocities does not occur. Thus, the independent rollers 33a stably support the rotational surface of the optical recording medium M. The independent rollers 33a are supported by a shaft 33b and rotated by the rotation of the optical recording medium M.

Since many independent rollers 33a face the entire recording area pushed by the thermal head 14, the pushing force of the head applied to the optical recording medium M is uniform, and a high-quality image with uniform recording density can be printed. Preferably, the independent rollers 33a should be formed of a soft and elastic material, such as rubber, since they protect the information recording/playback surface 3 of the optical recording medium M and absorb vibration and uneven rotation.

In the above-described second embodiment, the driving mechanism of the optical recording medium M using driven rollers is provided separately. In addition to this structure, as described below, pairs of gripping rollers may be used to stably support the rotational surface of the optical recording medium M. Such a modification to the embodiment will be described below.

Figs. 7(a) and 7(b) are schematic views of the main elements of a printing device according to a modification of the second embodiment. More specifically, Fig. 7(a) is a top view of part of the printing device, and Fig. 7(b) is a cross-sectional view of part of the printing device. Figs. 7(a) and 7(b) illustrate the parts (part 101 of the printing device) surrounded by dotted lines in Figs. 3(a) and 3(b). Although not shown in Figs. 7(a) and 7(b), the parts other than the part 101 of the printing device may have that same structure as those shown in Figs. 3(a) and 3(b). In Figs. 7(a) and 7(b), the elements that are the same as those in Figs. 3(a) and 3(b) are represented by the same reference numerals.

The parts that differ from those of the second embodiment will mainly be described below.
In this modification, as shown in Figs. 7(a) and 7(b), pairs of gripping rollers (50a and 51a), (50b and 51b), and (50c and 51c) are provided. More specifically, upper rollers 50a, 50b, and 50c are in contact with the printing layer 4 of the optical recording medium M at three positions substantially 120° apart from each other. On the opposite side of the optical recording medium M, lower rollers 51a, 51b, and 51c are provided so as to face the upper rollers 50a, 50b, and 50c, respectively. By providing such gripping rollers (50a and 51a), (50b and 51b), and (50c and 51c), the optical recording medium M can be rotated more stably.

Such pairs of gripping rollers may also be added to the structure according to the first embodiment.

### (2) A modification of the optical recording medium being an optical card (throughout this section, "optical recording medium" refers to an optical card):

As described above, an optical recording medium P has a plurality of parallel recording tracks 20 on the recording/playback functional layer 24, and address information is recorded along the recording tracks 20. The address information is detected by irradiating the information recording/playback surface 26 with a laser beam while the optical recording medium P is moved horizontal or vertical to the recording tracks 20. Since the address information is recorded along the recording tracks 20, the driving means of the printing device functions as moving means for moving the optical recording medium P horizontal or vertical to the recording tracks 20. An embodiment of a printing device including such driving means will be described below.

### (2-1) Third Embodiment

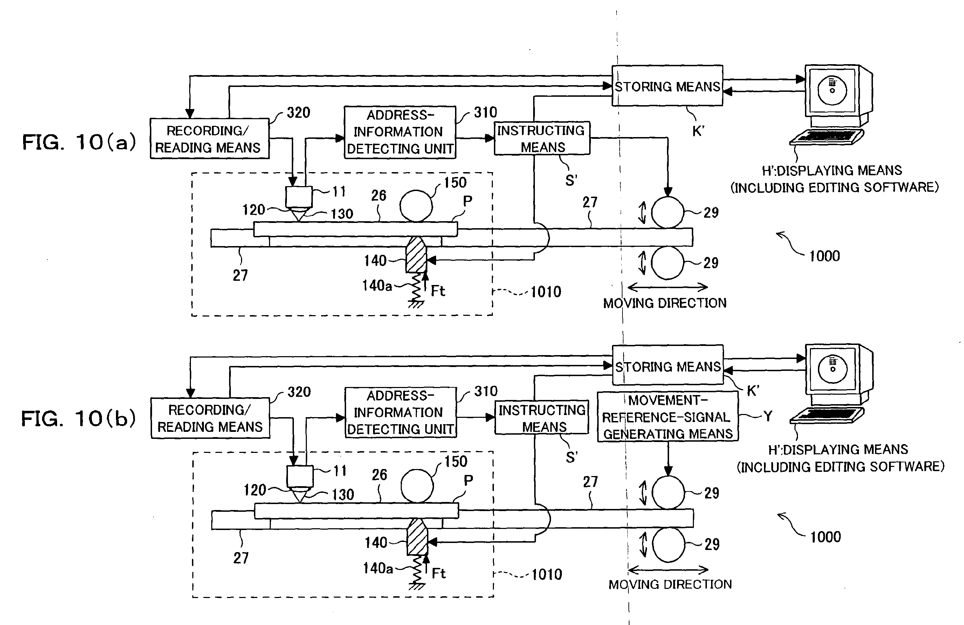

A printing device for an optical recording medium according to a third embodiment (hereinafter may be referred to as "printing device according to the third embodiment") will be described with reference to Figs. 10(a) to 12(c). Figs. 10(a) and 10(b) are functional block diagrams illustrating the structure of the printing device according to the third embodiment. More specifically, Fig. 10(a) illustrates the structure of the printing device that simultaneously controls the movement of the optical recording medium and printing using address information. Fig. 10(b) illustrates the structure of the printing device that carries out printing using address information. Figs. 10(a) and 10(b) include schematic partial cross-sectional views of some of the elements of the printing device.

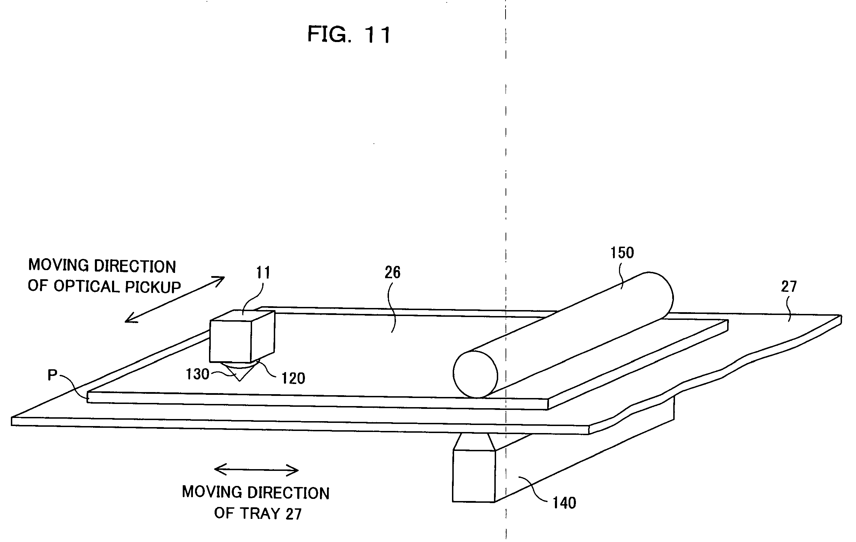

Fig. 11 is a schematic perspective view of part of the printing device (represented by reference numeral 1010) shown in Figs. 10(a) and 10(b).

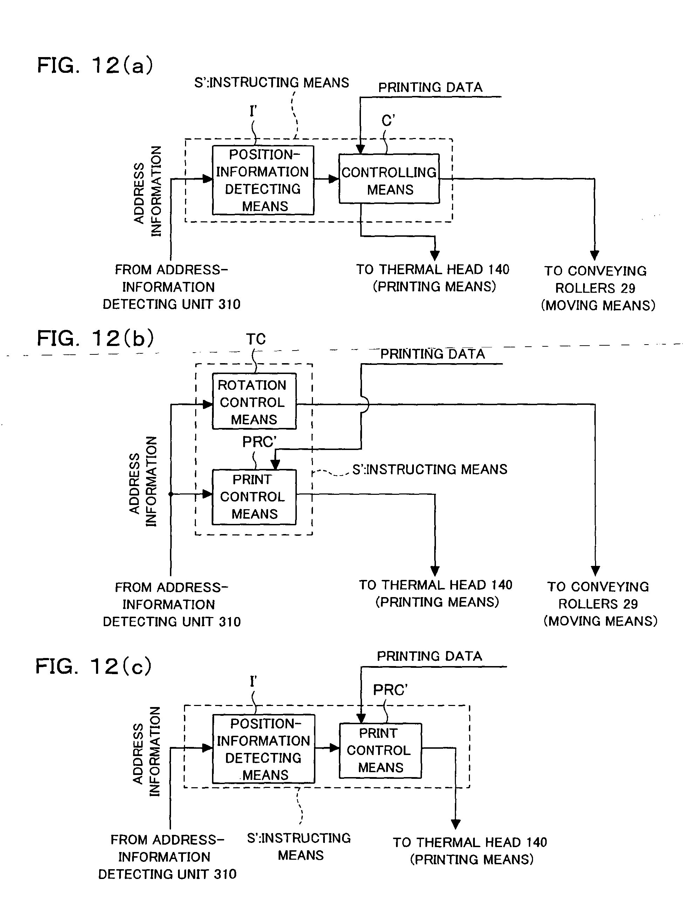

Figs. 12(a) to 12(c) are functional block diagrams illustrating the structure of instructing means of the printing device shown in Figs. 10(a) and 10(b). Figs. 12(a) to 12(b) illustrate the structure of the instructing means of the printing device shown in Fig. 10(a), and Fig. 12(c) illustrates the structure of the instructing means of the printing device shown in Fig. 10(b).

### (Simultaneously carrying out position control of the optical recording medium and printing using address information)

An embodiment of a printing device that simultaneously carries out position control of the optical recording medium and printing using address information will be described with reference to Figs. 10(a), 11, 12(a), and 12(b). Position control of the optical recording medium P is actually movement control of the optical recording medium P.

As shown in Fig. 10(a), the printing device 1000 includes moving means including conveying rollers 29 and a tray 27; detecting means including an optical pickup 11, an objective lens 120, and an address-information detecting unit 310; printing means including a thermal head 140 and a backup roller 150, an instructing means S' for receiving address information from the address-information detecting unit 310 and printing data from storage means K' and outputting an instruction to the moving means and the printing means; storage means K' for storing printing data; recording/reading means 320 for recording and reading out printing data on the optical recording medium P through the optical pickup 11 and the objective lens 120; and displaying means H' for displaying an image of the optical recording medium P on which printing has been carried out. Fig. 11 is a schematic perspective view of the part 1010 of the printing device surrounded by dotted lines in Fig. 10(a). In Fig. 11, a part of the tray 27 on the right side is not illustrated.

Although the detail of the optical recording medium P is not shown in Figs. 10(a) and 11, the optical recording medium P includes a recording/playback functional layer that allows recoding and playback by a laser beam, a information recording/playback surface that is irradiated with a laser beam, and a printing layer that is separated from the information recording/playback surface by the recording/playback functional layer. The recording/playback functional layer has a plurality of recording tracks formed parallel to each other, and address information is recorded along the recording tracks. Since thermal printing is carried out on the printing layer of the optical recording medium P, the printing layer shown in Figs. 10(a) and 11 should be a thermosensitive color layer. Since the optical recording medium P is the same as that already described with reference to Figs. 8 and 9, description of the optical recording medium P is omitted.

The optical recording medium P is held above the tray 27. The pair of conveying rollers 29 is in compressive contact with the top and bottom surfaces of the tray 27. The tray 27 moves left and right by driving the conveying rollers 29.

The thermal head 140 is in contact with the surface of the printing layer (thermosensitive color layer) of the optical recording medium P. The thermal head 140 is a line thermal head that extends in the width direction of the optical recording medium P (the width direction of the optical recording medium P is orthogonal to the long side of the optical recording medium P). The thermal head 140 is disposed along the width direction of the optical recording medium P and is pushed towards the optical recording medium P by a spring 140a attached to the device cover with a pushing force Ft. The thermal head 140 has a length substantially the same as the width of the optical recording medium P and can carry out printing in the width direction of the printing layer 25 at once. The thermal head 140 may be a serial head that can scan in the direction orthogonal to the recording tracks of the optical recording medium P (the width direction of the optical recording medium P).

The thermal head 140 may be a thin-film thermal head, a laser thermal head, or an LED thermal head. In particular, a laser thermal head or a LED thermal head is preferred because of easy maintenance as follows. Since printing can be carried out without contacting the optical recording medium M, dust and contamination on the head do not occur, and cleaning of the thermal head is not required. A further advantage is that printing can be carried out on an uneven surface because of the contactless printing.

On the opposite side of the optical recording medium P from the thermal head 140, the backup roller 150 is disposed in contact with the information recording/playback surface 26 of the optical recording medium P. The backup roller 150 supports the optical recording medium P from the back side against the pushing force Ft by the thermal head 140 from the surface and rotates together with the optical recording medium P. Since the backup roller 150 is disposed such that the thermal head 140 faces the entire recording region pushed by the thermal head 140, the pushing force of the head is uniform, and a high-quality image with uniform recording density can be printed.

The surface of the backup roller 150 is formed of a soft elastic material (for example, rubber). The backup roller 150 formed of such a material can more easily protect the information recording/playback surface 26 of the optical recording medium P and dump vibration and uneven rotation.

The address information recorded on the optical recording medium P is detected as described below. The optical recording medium P is moved in the horizontal direction in Fig. 10(a) by the moving means (conveying rollers 29 and tray 27), while the recording tracks (not shown in Figs. 10(a) and 11) of the optical recording medium P are irradiated with a focused beam 130 via the optical pickup 11 and the objective lens 120 from the side of the information recording/playback surface 26. A signal obtained by detecting the reflected beam of the focused beam 130 is detected as address information by the address-information detecting unit 310. If required, the optical pickup 11 and the objective lens 120 are movable in the width direction of the optical recording medium P (see Fig. 11). The objective lens 120 is also movable in the width direction of the optical recording medium P within a range of several tens of micrometers. In other words, coarse movement in the width direction of the optical recording medium P is carried out by moving the optical pickup 11. Fine movement, such as moving between adjacent recording tracks, is carried out by moving the objective lens 120 in the width direction of the optical recording medium P. Figs. 10(a) and 11 do not show the moving device for moving the optical pickup 11 and the objective lens 120 in the width direction of the optical recording medium P. For detection of the address information on the optical recording medium P, the same playback system as that of a replay device for a typical optical disk may be used.

A printing method using a printing device 1000 will be described below.
In the printing device 1000, the primary scanning direction is the width direction of the optical recording medium P, and the secondary scanning direction is the direction of the long side of the optical recording medium P. The printing device 1000 carries out printing by selectively applying heat to pixel areas arranged in the width direction of the optical recording medium P so as to generate color.

In synchronization with the start of printing, the optical recording medium P is moved by applying electric power to a motor that drives the conveying rollers 29 (not shown in Fig. 10(a)). The optical recording medium P reciprocates to the left and right in Fig. 10(a). Subsequently, the optical pickup 11 is moved in the width direction of the optical recording medium P close to a predetermined recording track so as to detect address information. Then, the focused beam 130 from the optical pickup 11 is focused on the information recording/playback surface 26 (recording track) through the objective lens 120. Then, a signal generated by detecting the reflected focused beam 130 is detected by the address-information detecting unit 310 as address information. The detected address information is input to the instructing means S'. Simultaneously, printing data generated at an external host is input from the storage means K' to the instructing means S' via an I/F and a CPU. The address-information detecting unit 310 may simply use a known read-out method of the address information for an optical disk drive.

The instructing means S' controls the position of the optical recording medium P based on the input address information. More specifically, the instructing means S' controls driving of the motor of the conveying rollers 29. At the same time, the instructing means S' sends a signal for operating the thermal head 140 to the thermal head 140 every time the instructing means S' determines that a position on the optical recording medium P has reached a point at which printing should be carried out on the basis of the input address information and the printing data. In response to the signal, thermal printing is carried out at a predetermined position on a printing layer 25 (thermosensitive color layer) of the optical recording medium P.

At this point, a displaying means H' for displaying an image printed on the optical recording medium P is connected to the storage means K' to take in printing data, and this printing data is displayed on a monitor so as to visualize the image printed on the optical recording medium P. The displaying means H' is also connected to input devices, such as a keyboard, a mouse, a pointing device for moving the cursor, and pushbuttons. Printing data can be edited using these input devices. Since printing data can be edited on the monitor by the displaying means H', the ease-of-use is improved for the user. To further improve the ease-of-use, the displaying means H' contains predetermined software for editing the content to be printing on the optical recording medium P. The storage means K, the displaying means H, and the input devices connected to these means may be integrated with the printing device 1000.

Printing data may be recorded on the optical recording medium P by recording means (the recording means includes the recording/reading means 320, the optical pickup 11, and the objective lens 120) before, after, or during printing. More specifically, printing data is recorded on the optical recording medium P via the storage means K', the recording/reading means 320, the optical pickup 11, and the objective lens 120. In this way, previous printing data (in particular, information about the content to be printed and the printing locations on the printing layer 25 (thermosensitive color layer)) can be read out by the storage means K' via the recording/reading means 320 and processed when additional printing is carried out on the optical recording medium P. As a result, character and image data corresponding to the information to be additionally printed can be printed at a printing position adjoining the printing positions of the character and image data corresponding to the information recorded previously. In particular, additional printing can be easily carried out if the printing data to be recorded on the optical recording medium P is data associated with the content to be printed and the printing positions.

In this embodiment, when recording of the printing data and printing are carried out simultaneously, printing data is recorded while the address information is being detected. Such a method is advantageous in that the time required for printing and recording can be reduced. Furthermore, by simultaneously carrying out printing and recording of printing data, the optical recording medium P does not have to be inserted to and removed from the printing device for printing and recording. As a result, printing and recording of printing data can be reliably carried out on the same optical recording medium. The printing data may be recorded on the optical recording medium P before or after printing.

The printing data is not limited. However, usually, the printing data is associated with the content to be printed and data associated with the printing positions. The data associated with the content to be printed includes typically character and image data associated with information to be recorded on the optical recording medium P. For example, when music data is recorded on the optical recording medium P, the data associated with the content to be printed is information about the song title, the playing time, the name of the musician, and so on. For example, when video data is recorded on the optical recording medium P, the data associated with the content to be printed is information about, for example, the movie title, the playing time, the name of the director, and the names of the leading actor. Data associated with the printing positions is, for example, information about the printing locations on the printing layer 25 (thermosensitive color layer).

According to the above-described steps, an optical recording medium on which printing and recording of printing data has been carried out can be produced.

In this embodiment, the recording means (including the optical pickup 11, the objective lens 120, and the recording/reading means 320) further has a readout function for reading out printing data recorded on the optical recording medium P. Such a function facilitates additional printing, as described below.

Preferably, additional printing is carried out according to the following method. This method includes the steps of reading out printing data recorded on the optical recording medium P, confirming the characters and/or images printed on the optical recording medium P, confirming the printing position in the printing layer, and then carrying out additional printing. More specifically, printing data is read out by a reflected beam from the optical recording medium P irradiated with the focused beam 130 through the objective lens 120. Then, the readout printing data is displayed on the displaying means H' via the storage means K'. In this way, the current printing status can be checked on a screen. Then, using software for editing the content to be printed included in the displaying means H', the content to be additionally printed can be edited on the screen. Subsequently, printing data corresponding to the content to be additionally printed is output to the storage means K' and then output to the instructing means S' via the storage means K'. In this way, additional printing using this printing data is carried out according to the same method as described above. Additional printing can be carried out satisfactorily by further recording the printing data for additional printing on the optical recording medium P.

Instead of editing using the displaying means H', additional printing data can be read out from an external storage device, such as a hard disk (not shown in Figs. 10(a) and 11). Then, this additional printing data may be stored in the storage means K' to carry out additional printing. The content of the additional printing may be displayed on the displaying means H' so that the user can confirm the section on which additional printing is to be carried out.

When printing data is recorded on the optical recording medium P, additional printing may be carried out according to the method described below. This method includes the steps of reading out printing data recorded on the optical recording medium P using the recording/reading means 320, outputting this printing data to the instructing means S' via the storage means K', and then carrying out printing on the printing layer of the optical recording medium P. Printing data may also be obtained by reading out the printing data from an external storage device, such as a hard disk, (not shown in Figs. 10(a) and 11) and storing this printing data in the storage means K'.

After printing, the printing data may be recorded on the optical recording medium P via the storage means K', the recording/reading means 320, the optical pickup 11, and the objective lens 120. In this way, previous printing data (in particular, information about the content to be printed and the printing locations on the printing layer 25 (thermosensitive color layer)) can be read out by the storage means K' via the recording/reading means 320 when additional printing is carried out on the optical recording medium P, and then additional printing may be carried out on the basis of the readout printing data. As a result, for example, character and image data corresponding to the information to be additionally printed can be printed at a printing position adjoining the printing positions of the character and image data corresponding to the information recorded previously.

Next, examples of the instructing means S' will be described below.
Examples of the instructing means S' are as follows. For example, the instructing means S' may detect position information of the optical recording medium P based on the detected address information, carry out position control (movement control) of the optical recording medium P using the position information, and carry out printing on the printing layer in synchronization with the position information. The structure of the instructing means S' of this example (hereinafter, may be referred to as "first example") will be described with reference to Fig. 12(a).

Fig. 12(a) is a functional block diagram illustrating the structure of the instructing means S' according to the first example. As shown in Fig. 12(a), the instructing means S' includes position-information detecting means I' for converting address information detected by the address-information detecting unit 310 (detecting means) into position information and controlling means C' for controlling the conveying rollers 29 (moving means) and the thermal head 140 (printing means) on the basis of the position information.

The position-information detecting means I' detects the position of the optical recording medium P on the basis of the address information of the optical recording medium P. Then, the detected position of the optical recording medium P is output to the controlling means C'. The controlling means C' starts electric power supply to the thermal head 140 on the basis of the printing data input from the storage means K' in synchronization with the detected position. Energizing the thermal head 140 causes thermal energy at a level sufficient for thermal coloring to transfer to the printing layer 25 (thermosensitive layer) of the optical recording medium P. In this way, color is generated at the printing layer 25 (thermosensitive layer), and data of characters and image generated at an external host is printing on the optical recording medium P. While the electric power is supplied to the thermal head 140, the angular velocity of the rotation of the conveying rollers 29 during printing is controlled using the detected position so that displacement of the printing is minimized. The control of the rotation of the conveying rollers 29 leads to control of the position of the tray 27 and thus control of the position of the optical recording medium P.

The instructing means S' according to another example may simultaneously carry out position control (movement control) of the optical recording medium P using detected address information and printing on the printing layer 25 in synchronization of the detected address information. The structure of this example of the instructing means S' (hereinafter, may be referred to as "second example") will be described with reference to Fig. 12(b).

Fig. 12(b) is a schematic view illustrating the structure of the instructing means S' according to the second example. As shown in Fig. 12(b), the instructing means S' includes drive control means (hereinafter may be referred to as "movement control means") TC for controlling the conveying rollers 29 (moving means) using the address information detected by the address-information detecting unit 310 (detecting means) and print control means PRC' for controlling the thermal head 140 (printing means) using the address information detected by the address-information detecting unit 310 (detecting means).

The movement control means TC carries out position control of the conveying rollers 29 (moving means) on the basis of the address information of the optical recording medium P. More specifically, the control of the rotation of the conveying rollers 29 leads to control of the position of the tray 27 and thus the control of the position of the optical recording medium P. As described above, the conveying rollers 29 are rotated by directly using the address information. Alternatively, however, the conveying rollers 29 are rotated by using address information converted into position information of the optical recording medium P.

The print control means PRC' starts supplying electric power to the thermal head 140 on the basis of printing data input from the storage means K' in synchronization with the input address information of the optical recording medium P so as to carry out printing at a predetermined position on the printing layer of the optical recording medium P. Energizing the thermal head 140 causes thermal energy at a level sufficient for thermal coloring to transfer to the printing layer 25 (thermosensitive layer) of the optical recording medium P. In this way, color is generated in the printing layer 25 (thermosensitive layer), and data of characters and image generated at an external host is printed on the optical recording medium P. Alternatively, the address information may be converted into position information (angle information) of the optical recording medium P, and then electric power may be supplied to the thermal head 140 using this position information.

As described above, in the instructing means S' according to the second example (see Fig. 12(b)), the moving means and the printing means are controlled in parallel.

Common points of the instructing means S' according to the first and second examples (see Figs. 12(a) and 12(b)) are described below. In both examples, instead of the position information of the conveying rollers 29 (moving means), position information of the optical recording medium P can be obtained on the basis of address information recorded on the optical recording medium P. In this way, even when the thermal head 140 and the optical recording medium P are misaligned after the optical recording medium P is unloaded and then reloaded on the tray 27, printing can be continued on the basis of the address information recorded on the optical recording medium P, without being affected by the displacement. In other words, additional printing can be carried out so that the printed image matches a previously printed image.

Another common point of the instructing means S' according to the first and second examples is that address information recorded on the optical recording medium P is played back at the optical pickup 11 and the address-information detecting unit 310, and the detected signal is used as a feedback signal for the conveying rollers 29 (moving means). This leads to precise control of the amount of movement and the moving speed of the optical recording medium P, like the data recorded on the optical recording medium P.

Differences between the instructing means S' according to the first and second examples (see Figs. 12(a) and 12(b)) are described below.

According to the first example (see Fig. 12(a)), the rotation control of the conveying rollers 29 (moving means) and the electric power supply to the thermal head 140 (printing by the printing means) are simultaneously controlled by the controlling means C'. In other words, printing is carried out while the printing position can be monitored using the position information of the optical recording medium P and while the moving speed of the conveying rollers 29 (moving means) can be controlled to reduce the displacement in the printing. As a result, in the first example (see Fig. 12(a)), the quality of the printed image can be enhanced. Furthermore, displacement between an image printed by additional printing and a previously printed image can be suppressed. However, the first example tends to require complicated control since rotation control is carried out based on feedback on the printing status.

In contrast, in the second example (see Fig. 12(b)), rotation control of the conveying rollers 29 (moving means) is carried out by the movement control means TC. Electric power to the thermal head 140 (printing by the printing means) is supplied through the print control means PRC'. In other words, although address information is used, rotation and printing are controlled independently. As a result, movement control cannot be carried out based on feedback on the printing status, but the control becomes simple. The instructing means S' according to this example may be used, for example, when character information is mainly printed on the printing layer 25. This example is advantageous in that the cost of the control circuit can be reduced while high printing accuracy is maintained.

As described above, the first or second example may be selected depending on the usage of the printing device 1000 (for example, depending on whether image information or character information is to be mainly printed) and cost.

As described above, the tray 27 is moved by the conveying rollers 29. However, the moving means is not limited thereto. For example, a linear motor, a conveying screw, or a timing belt may be used. Furthermore, other standard linearly moving means may be used.

### (Printing using address information)

Next, an embodiment of a printing device used when printing is carried out on an optical recording medium using address information will be described with reference to Figs. 10(b) and 12(c). Use of such a printing device leads to a cost reduction of the printing device while the printing quality is maintained.

In Fig. 10(b), the elements that are the same as those in Fig. 10(a) are represented by the same reference numerals. Figs. 10(a) and 10(b) are different in that, the conveying rollers 29 (moving means) in Fig. 10(a) is controlled by the instructing means S' on the basis of the address information detected at the optical recording medium P, whereas the conveying rollers 29 (moving means) in Fig. 10(b) is driven by movement-reference-signal generating means Y without rotation control using address information. This difference will be mainly described below.

As shown in Fig. 10(b), the conveying rollers 29 (moving means) is driven based on a reference signal from an internal unit of the printing device. More specifically, a rotation reference signal is generated at the movement-reference-signal generating means Y, and the conveying rollers 29 (moving means) is rotated in response to this rotation reference signal. By controlling the rotation of the conveying rollers 29, the position of the tray 27 and the position control of the optical recording medium P are carried out. The conveying rollers 29 (moving means) are driven to reciprocate the optical recording medium P in the left and right directions in Fig. 10(b).

The address information is input to the instructing means S'. Every time the instructing means S' determines that the optical recording medium P reaches the printing position on the basis of the detected position information, a signal for operating the thermal head 140 is sent to the thermal head 140. By this signal, thermal printing is carried out at a predetermined position on the printing layer 25 (thermosensitive layer) of the optical recording medium P.

In this example, since movement control is not carried out by the instructing means S', the accuracy of the movement (the accuracy of the position) is lower than that of Fig. 10(a). However, displacement of the image to be printed can be corrected since printing control is carried out by an address signal.

Next, an example of the instructing means S' will be described.
The example of the instructing means S is as follows. For example, the instructing means S' may detect position information of the optical recording medium P according to the detected address information and carry out printing on the printing layer in synchronization with the position information. The structure of this example of the instructing means S' (hereinafter, may be referred to as "third example") will be described with reference to Fig. 12(c).

Fig. 12(c) is a functional block diagram illustrating the structure of the instructing means S' according to the third example. As shown in Fig. 12(c), the instructing means S' includes position-information detecting means I' for converting address information detected by the address-information detecting unit 310 (detecting means) into position information and print control means PRC' for controlling the thermal head 140 (printing means) on the basis of the position information. The position-information detecting means I' may be the same as that in Fig. 12(a). Furthermore, the position-information detecting means I' may be omitted. Similarly, the print control means PRC' may be same as that in Fig. 12(b).

The position-information detecting means I' detects the position of the optical recording medium P on the basis of the address information of the optical recording medium P. Then, the detected position of the optical recording medium P is output to the print control means PRC'. The print control means PRC' starts electric power supply to the thermal head 140 on the basis of the printing data input from the storage means K' in synchronization with the detected position. Energizing the thermal head 140 causes thermal energy at a level sufficient for thermal coloring to transfer to the printing layer 25 (thermosensitive layer) of the optical recording medium P. In this way, color is generated at the printing layer 25 (thermosensitive layer), and data of characters and images generated at an external host is printed on the optical recording medium P.

This example is advantageous in that the cost of the control circuit can be reduced while high printing accuracy is maintained.

### (2-2) Fourth Embodiment

In the third embodiment, the tray 27 (optical recording medium P) reciprocates (only in the left and right direction in Figs. 10(a) and 10(b)). The optical pickup 11 is movable in the width direction of the optical recording medium P (see Fig. 11). A line thermal head is used as the thermal head 140. In relation to this, a roller that has substantially the same length as the width of the optical recording medium P is used as the backup roller 150.

In the fourth embodiment, the tray is movable in the width direction of the optical recording medium P in addition to the reciprocating movement. The optical pickup is fixed. The objective lens is also movable in the width direction of the optical recording medium P within a range of several tens of micrometers to move finely between recording tracks. A thermal head having a small printing width, such as a serial head, is used. Furthermore, instead of the backup roller 150, a backup ball is used.

Parts of the fourth embodiment, other than those described above, may be the same as those according to the third embodiment. The different parts will mainly be described below.

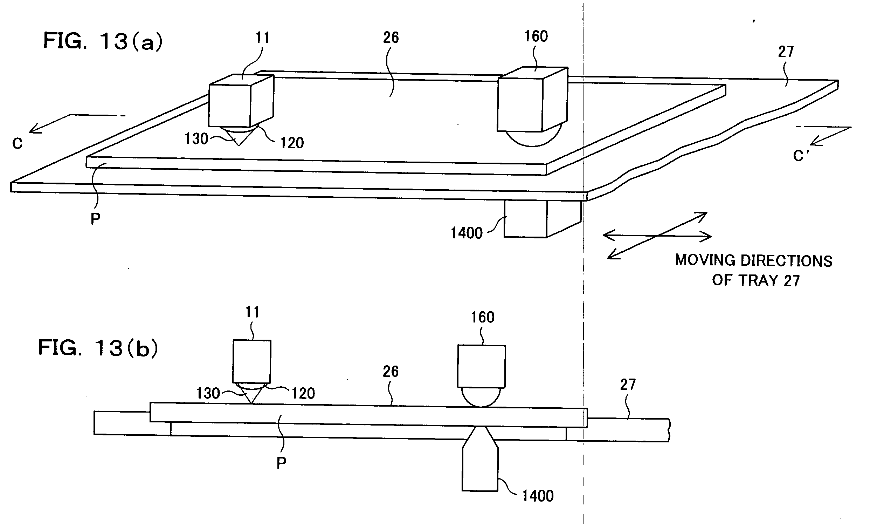

Figs. 13(a) and 13(b) are schematic views of the main elements of a printing device according to the fourth embodiment. More specifically, Fig. 13 (a) is a perspective view of the main elements of the printing device according to the fourth embodiment, and Fig. 13(b) is a cross-sectional view of the main elements of the printing device according to the fourth embodiment. Fig. 13(b) is a schematic cross-sectional view taken along plain C-C' in Fig. 13(a). In Figs. 13(a) and 13(b), the elements that are the same as those in Fig. 11 are represented by the same reference numerals.

Figs. 13(a) and 13(b) illustrate the parts (part 1010 of the printing device) surrounded by dotted lines in Figs. 10(a) and 10(b). Although not shown in Figs. 13(a) and 13(b), the parts other than the part 1010 of the printing device may have that same structure as those shown in Figs. 10(a) and 10(b). However, the movement of the tray (moving means) cannot be the same as that shown in Figs. 10(a) and 10(b). This is because, in Figs. 10(a) and 10(b), only reciprocating movement is carried out by the conveying rollers 29, but in Figs. 13(a) and 13(b), the tray 27 has to be moved not only in the left and right directions but also in the width direction of the optical recording medium P (see Fig. 13(a)). Such moving means may be composed of two sets of standard linear moving means, such as linear motors, conveying screws, and timing belts, movable along two axes orthogonal to each other.

As shown in Figs. 13(a) and 13(b), the optical pickup 11 is fixed. A serial head is used as a thermal head 1400. The optical recording medium P is interposed between the thermal head 1400 and a backup ball 160 facing the thermal head 1400.

At the same time printing is started, electric power is applied to a motor driving the tray 27 (not shown), and the optical recording medium P reciprocates in the direction of the long side of the optical recording medium P and in width direction of the optical recording medium P (vertical/horizontal reciprocating movement) (see Fig. 13(a)). Preferably, this reciprocation should be a regular movement. Examples of such regular movement are as follows. Horizontal movement is carried out so that the optical pickup 11 scans one recording track, which is formed parallel to the long side of the optical recording medium P, from one end to the other end. Subsequently, By finely moving the objective lens 120, the focal point of the focused beam 130 emitted from the optical pickup 11 is moved to the recording track adjacent to the above-mentioned recording track. Then, horizontal movement is carried out so that the adjacent recording track is scanned from one end to the other end. When the objective lens 120 reaches the limit of the movable range by repeating this process, the optical pickup 11 is relatively moved by shifting the tray 27 in the width direction of the optical recording medium P to a position where the objective lens 120 can vertically scan the recording track. Subsequently, this process is repeated appropriately.

While the tray 27 reciprocates in the vertical and horizontal directions, the focused beam 130 is focused on the information recording/playback surface 26 through the optical pickup 11 and the objective lens 120. Then, a signal obtained by detecting the reflected focused beam 130 is detected by the address-information detecting unit 310 (see Figs. 10(a) and 10(b)) as address information. The detected address information is input to the instructing means S' (see Figs. 10(a) and 10(b)). Simultaneously, printing data generated at an external host is input from the storage means K' (see Figs. 10(a) and 10(b)) to the instructing means S' (see Figs. 10(a) and 10(b)) via an I/F and a CPU. The instructing means S' (see Figs. 10(a) and 10(b)) sends a signal for operating a thermal head 1400 to the thermal head 1400 every time the instructing means S' determines that a position on the optical recording medium P has reached a point at which printing should be carried out on the basis of the input address information and the printing data. In response to the signal, thermal printing is carried out at a predetermined position on the printing layer 25 (thermosensitive color layer) of the optical recording medium P.

### Industrial Applicability

The printing method and printing device for the optical recording medium according to the present invention may be satisfactorily employed in printing on a variety of optical recording media, such as a CD, a CD-ROM, a CD-RW (ReWritable), a DVD-ROM, a write-once DVD, a rewritable DVD, or an optical recording medium read and/or recorded with blue laser.

Specific embodiments of the present invention are described above. It is apparent to one skilled in the art that various modifications may be made within the scope of the present invention.
This application is based on Japanese Patent Application No. 2005-310300 filed on October 25, 2005, Japanese Patent Application No. 2005-310301 filed on October 25, 2005, Japanese Patent Application No. 2006-238318 filed on September 1, 2006, and Japanese Patent Application No. 2006-238319 filed on September 1, 2006, the entire contents of which are incorporated herein by reference.

## Claims

1. A printing method applied to an optical recording medium having a recording/playback functional layer enabling recording or playback by a laser beam, an information recording/playback surface irradiated with the laser beam, and a printing layer separated from the information recording/playback surface by the recording/playback functional layer, wherein address information used for recording or playback is recorded on the recording/playback functional layer, the printing method comprising the steps of:
detecting the address information by irradiating the information recording/playback surface with the laser beam; and
carrying out printing on the printing layer using the detected address information.

2. The printing method applied to an optical recording medium according to Claim 1 further comprising the steps of:
detecting position information of the optical recording medium on the basis of the detected address information;
controlling the position of the optical recording medium using the position information; and
carrying out the printing on the printing layer in synchronization with the position information.

3. The printing method applied to an optical recording medium according to Claim 1 further comprising the steps of:
controlling the position of the optical recording medium using the detected address information; and
carrying out the printing on the printing layer in synchronization with the detected address information.

4. The printing method applied to an optical recording medium according to Claim 1 further comprising the steps of:
detecting position information of the optical recording medium on the basis of the detected address information; and
carrying out the printing on the printing layer in synchronization with the position information.

5. The printing method applied to an optical recording medium according to one of Claims 1 to 4 further comprising the step of:
reading out printing data for the printing from an external storage device or the optical recording medium.

6. The printing method applied to an optical recording medium according to one of Claims 1 to 5 further comprising the step of:
recording the printing data for the printing on the optical recording medium on which printing has been carried out, after the printing.

7. The printing method applied to an optical recording medium according to one of Claims 1 to 6, further comprising the step of:
carrying out thermal printing on a thermosensitive color layer, wherein the printing layer is the thermosensitive color layer.

8. The printing method applied to an optical recording medium according to one of Claims 1 to 7, further comprising the step of:
the recording/playback functional layer includes the reflective sublayer, the address information being recorded in a region provided with the reflective sublayer.

9. The printing method applied to an optical recording medium according to one of Claims 1 to 8, further comprising the step of:
detecting the address information by irradiating the information recording/playback surface with the laser beam while rotating the optical recording medium,
wherein the recording/playback functional layer includes a substrate, and the address information is recorded concentrically or spirally on the substrate.

10. The printing method applied to an optical recording medium according to one of Claims 1 to 8, further comprising the step of:
detecting the address information by irradiating the information recording/playback surface with the laser beam while moving the optical recording medium parallel or perpendicular to a plurality of recording tracks,
wherein the recording/playback functional layer includes the recording tracks formed parallel to each other, and the address information is recorded along the recording tracks.

11. A printing method applied to an optical recording medium having a recording/playback functional layer enabling recording or playback by a laser beam, an information recording/playback surface irradiated with the laser beam, and a printing layer separated from the information recording/playback surface by the recording/playback functional layer, the printing method comprising the steps of:
carrying out printing on the printing layer; and
recording printing data for the printing on the optical recording medium.

12. The printing method applied to an optical recording medium according to Claim 11, further comprising the step of:
recoding the printing data for printing on the optical recording medium while carrying out the printing.

13. The printing method applied to an optical recording medium according to Claim 11 or 12, wherein the printing data is data about a printing content and a printing position.

14. The printing method applied to an optical recording medium according to one of Claims 11 to 13, further comprising the steps of:
reading out the printing data recorded on the optical recording medium when additional printing is to be carried out on the optical recording medium on which printing has been carried out; and
carrying out the additional printing after confirming characters and/or images printed on the optical recording medium and a printing position on the printing layer.

15. The printing method applied to an optical recording medium according to one of Claims 11 to 14, further comprising the step of:
carrying out thermal printing on a thermosensitive color layer, wherein the printing layer is the thermosensitive color layer.

16. The printing method applied to an optical recording medium according to one of Claims 11 to 15, further comprising the step of:
carrying out the printing on the printing layer while rotating the optical recording medium, wherein the optical recording medium is shaped as a flat ring.

17. The printing method applied to an optical recording medium according to one of Claims 11 to 15, further comprising the step of:
carrying out the printing on the printing layer while moving the optical recording medium parallel or perpendicular to a plurality of recording tracks, wherein the optical recording medium includes the recording tracks formed parallel to each other.

18. The printing method applied to an optical recording medium according to one of Claims 1 to 9 or one of Claims 11 to 16, further comprising the step of:
carrying out additional printing at a desired position on the printing layer on the basis of a relative positional relationship between a printing position on the printing layer and an irradiation position of the laser beam when characters and/or images are already printed on the printing layer.

19. The printing method applied to an optical recording medium according to Claim 18, further comprising the step of:
reading out the relative positional relationship from an external storage device.

20. The printing method applied to an optical recording medium according to Claim 18, further comprising the step of:
determining the relative positional relationship by detecting the characters and/or images printed on the printing layer.

21. The printing method applied to an optical recording medium according to Claim 20, further comprising the step of:
detecting positions of characters and/or images printed on the printing layer in synchronization with the address information.

22. The printing method applied to an optical recording medium according to Claim 18, further comprising the step of:
determining the relative positional relationship by detecting a mark provided on the optical recording medium.

23. The printing method applied to an optical recording medium according to Claim 18, further comprising the step of:
determining the relative positional relationship by detecting the address information.

24. An optical recording medium on which printing and recording of the printing data have been carried out by the printing method according to one of Claims 11 to 17 carried out on the optical recording medium.

25. The optical recording medium according to Claim 24, further comprising:
a mark for determining the relative positional relationship between a printing position on the printing layer and an irradiation position with the laser beam.

26. A printing device for carrying out printing on a printing layer of an optical recording medium, the optical recording medium having a recording/playback functional layer enabling recording or playback by a laser beam, an information recording/playback surface irradiated with the laser beam, and the printing layer separated from the information recording/playback surface by the recording/playback functional layer, wherein address information for recording or playback is recorded on the recording/playback functional layer, the printing device comprising:
driving means for driving the optical recording medium;
detecting means for irradiating the optical recording medium with the laser beam and detecting the address information;
printing means for carrying out printing; and
instructing means for controlling the printing means to carry out the printing using the address information detected by the detecting means.

27. The printing device for an optical recording medium according to Claim 26,
wherein the instructing means includes:
position-information detecting means for converting the address information detected by the detecting means into position information; and
controlling means for controlling the driving means and the printing means on the basis of the position information detected by the position-information detecting means.

28. The printing device for an optical recording medium according to Claim 26,
wherein the instructing means includes:
drive control means for controlling the driving means using the address information detected by the detecting means; and
print control means for controlling the printing means using the address information detected by the detecting means.

29. The printing device for an optical recording medium according to Claim 26,
wherein the instructing means includes:
position-information detecting means for converting the address information detected by the detecting means into position information; and
print control means for controlling the printing means on the basis of the position information detected by the position-information detecting means.

30. The printing device for an optical recording medium according to one of Claims 26 to 29, further comprising:
storing means for storing printing data used for the printing.

31. The printing device for an optical recording medium according to one of Claims 26 to 30, further comprising:
recording/reading means for recording the printing data used for the printing on the optical recording medium on which printing has been carried out and for reading out the recorded printing data.

32. The printing device for an optical recording medium according to one of Claims 26 to 31, further comprising:
displaying means for displaying an image of the optical recording medium on which printing is carried out.

33. The printing device for an optical recording medium according to one of Claims 26 to 32,
wherein the printing layer is a thermosensitive color layer and the printing means is thermal printing means.

34. The printing device for an optical recording medium according to one of Claims 26 to 33,
wherein the recording/playback functional layer includes a substrate, and the address information is recorded concentrically or spirally on the substrate, and
wherein the driving means is rotating means for rotating the optical recording medium.

35. The printing device for an optical recording medium according to one of Claims 26 to 33,
wherein the recording/playback functional layer includes a plurality of recording tracks formed parallel to each other, and the address information is recorded along the recording tracks, and
wherein the driving means is composed as moving means for moving the optical recording medium parallel or perpendicular to the recording tracks.

36. A printing device for carrying out printing on a printing layer of an optical recording medium, the optical recording medium having a recording/playback functional layer enabling recording or playback by a laser beam, an information recording/playback surface irradiated with the laser beam, and the printing layer separated from the information recording/playback surface by the recording/playback functional layer, the printing device comprising:
driving means for driving the optical recording medium;
printing means for carrying out the printing; and
recording means for recording the printing data for the printing on the optical recording medium.

37. The printing device applied to an optical recording medium according to Claim 36, wherein the printing data is data on a printing content and a printing position.

38. The printing device applied to an optical recording medium according to Claim 36 or 37, further comprising:
storing means for storing printing data.

39. The printing device applied to an optical recording medium according to one of Claims 36 to 38, wherein the recording means has a readout function for reading out the printing data recorded on the optical recording medium.

40. The printing device applied to an optical recording medium according to one of Claims 36 to 39, further comprising:
displaying means for displaying an image of the optical recording medium on which printing is to be carried out.

41. The printing device applied to an optical recording medium according to one of Claims 36 to 40, wherein the printing layer is a thermosensitive color layer and the printing means is thermal printing means.

42. The printing device applied to an optical recording medium according to one of Claims 36 to 41,
wherein the optical recording medium is shaped as a flat ring, and
wherein the driving means is rotating means for rotating the optical recording medium.

43. The printing device applied to an optical recording medium according to one of Claims 36 to 41,
wherein the optical recording medium includes a plurality of recording tracks formed parallel to each other, and
wherein the driving means is moving means for moving the optical recording medium parallel or perpendicular to the recording tracks.

44. The printing device applied to an optical recording medium according to one of Claims 26 to 34 or one of Claims 36 to 42,
wherein the printing means carries out additional printing at a desired position on the printing layer on the basis of a relative positional relationship between a printing position on the printing layer for the printing means and an irradiation position with the laser beam for the detecting means when characters and/or images are already printed on the printing layer.

45. The printing device applied to an optical recording medium according to Claim 44 further comprising:
storing means for storing the relative positional relationship.

46. The printing device applied to an optical recording medium according to Claim 44, further comprising:
an image sensor for detecting characters and/or images printed on the printing layer,
wherein the printing means detects the relative positional relationship on the basis of the detection result of the characters and/or images by the image sensor.

47. The printing device applied to an optical recording medium according to Claim 46, wherein the image sensor detects the positions of the characters and/or images in synchronization with the detection of the address information by the detecting means.

48. The printing device applied to an optical recording medium according to Claim 46 or 47, wherein the image sensor is a line image sensor.

49. The printing device applied to an optical recording medium according to Claim 44, further comprising:
an image sensor for detecting a mark provided on the optical recording medium,
wherein the printing means detects the relative positional relationship on the basis of the detection result of the mark by the image sensor.

50. The printing device applied to an optical recording medium according to Claim 49, wherein the image sensor is a position sensor.

51. The printing device applied to an optical recording medium according to Claim 44, wherein the printing means detects the relative positional relationship on the basis of the detection result of the address information by the detecting means.
